# EUROPEAN PATENT APPLICATION

(11) **EP 4 706 389 A1**
(43) Date of publication of application: **11.03.2026**
(21) Application number: 24814517.9
(22) Date of filing: 30.05.2024
(51) Int. Cl.: A01K 74/00, A01K 75/00, A01K 79/00, A01K 79/02, E02B 15/10

(54) **AMPHIBIOUS NETTING SYSTEM AND NETTING METHOD**

(30) Priority: 31.05.2023 CN 202321366704 U; 31.05.2023 CN 202310635596
(71) Applicant: ORIENTAL VIEW (GUANGDONG) CO., LTD., Zhuhai, Guangdong 519000 (CN)
(72) Inventor: CANG, Anguo, Zhuhai, Guangdong 519000 (CN); LIU, Yuanzhihong, Zhuhai, Guangdong 519000 (CN)
(74) Representative: Wang, Bo
(86) International application number: PCT/CN2024/096236
(87) International publication number: WO 2024/245320

(57) **Abstract**

An amphibious netting system and a netting method. In the amphibious netting system, a fishing net (2) is connected to a rotating disk (1), and by means of a binding assembly (3), the folded fishing net (2) is bound to and thus rotate with the rotating disk (1). When the rotating disk (1) rotates at a preset rotational speed, under the action of a centrifugal force, the binding assembly (3) can actively or passively release the fishing net (2), and the fishing net (2) is accordingly unfolded to create a netting space (22).

## Description

### CROSS REFERENCE OF RELATED APPLICATION

This application is based on Chinese Application Nos. CN202321366704.1 and CN202310635596.1, claims priority thereto, and incorporates the disclosures of those Chinese applications herein in their entireties.

### BACKGROUND OF THE PRESENT INVENTION

### FIELD OF INVENTION

The present invention relates to the field of net-catching technology, and more particularly to an amphibious netting system and netting method thereof.

### DESCRIPTION OF RELATED ARTS

Conventional net fishing is widely used primarily in the fisheries sector. In recent years, with increasing emphasis on environmental protection, net fishing has also been applied to the retrieval of solid floating debris in rivers, lakes, and oceans. Additionally, net fishing is used to capture land-based targets. For the former two methods, the implementation typically involves manual net casting or boat-drawn nets, while the latter mainly relies on manual net casting. Therefore, these net fishing methods still suffer from high costs, low efficiency, and heavy labor, especially the inaccuracy of manual net casting.

With the development and progress of technology, net trapping should have better operating methods and net trapping systems. This application is proposed to address the problems existing in the prior art.

### SUMMARY OF THE PRESENT INVENTION

The technical problem this application aims to solve is to provide an amphibious netting system. The fishing net is connected to a rotating disk, and the folded fishing net is bound to the rotating disk by a binding assembly, causing it to rotate. The rotation of the rotating disk does not require manual driving. When the rotating disk reaches a preset speed, the binding assembly can actively or passively loosen the fishing net under the action of centrifugal force, and the fishing net will open accordingly to form a net-catching space, easily and efficiently capturing the target object. Therefore, this application is not limited to use in the fishery field, but can also be applied to the capture of target objects on land, and to the environmental protection field for the capture and cleanup of solid floating pollutants on the surface of oceans, lakes, rivers, etc., improving the traditional net-catching operation method and increasing net-catching efficiency.

To solve the above-mentioned technical problems, this application provides an amphibious netting systemvcomprising a fishing net and a rotating disk rotatable about its own central axis, wherein the fishing net comprises a connecting part and a free part, the fishing net is connected to the rotating disk through the connecting part, and the free part of the fishing net is provided with a counterweight, wherein the fishing net is bound to the rotating disk by a binding assembly after folding and rotates with the rotating disk, and a tray for supporting the folded fishing net is formed circumferentially on the outer side of the rotating disk, wherein after the fishing net is folded, the free part of the fishing net and the counterweight are located on an outside, wherein when the rotating disk rotates to a preset speed, the binding assembly automatically or passively loosens the fishing net, wherein the counterweight flies out along a circumferential tangential direction of the rotating disk, the fishing net opens under the traction of the counterweight to form a net trapping space.

In the above mentioned amphibious netting system, a tray for supporting a folded fishing net is formed circumferentially on an outer side of the rotating disk.

In the above mentioned amphibious netting system, a central hanger is coaxially connected to an inner side of the rotating disk, and the amphibious netting system further comprises a coaxial rotorcraft, a bottom of the coaxial rotorcraft is coaxially fixedly connected to the central hanger, and when the coaxial rotorcraft hovers and spins in place, the rotating disk is driven to rotate about its central axis.

In the above mentioned amphibious netting system, a float is connected to the rotating disk, a central hanger is coaxially connected to an inner side of the rotating disk, a clutch connection part is formed at an upper end of the central hanger, and the amphibious netting system further comprises a coaxial rotorcraft, a bottom of the coaxial rotorcraft is provided with an adapter for detachable connection with the clutch connection part, and when the coaxial rotor aircraft hovers and spins in place, the rotating disk is driven to rotate about its central axis by connecting the adapter and the clutch connection part.

In the above mentioned amphibious netting system, a float is connected to the rotating disk, a central hanger is coaxially connected to an inner side of the rotating disk, a clutch connection part is formed at an upper end of the central hanger, and the amphibious netting system further comprises a multi-rotor aircraft, a rotating disk drive mechanism is provided at a bottom of the multi-rotor aircraft, and a power output end of the rotating disk drive mechanism is provided with a detachable connection with the clutch connection part, the multi-rotor aircraft is connected to the adapter and the clutch connection part through the adapter and drives the rotating disk to rotate about its central axis through the rotating disk drive mechanism.

In the above mentioned amphibious netting system, the rotating disk is equipped with a turbofan to allow the rotating disk to accelerate its rotation when the rotating disk is in free fall in the air, wherein when the rotating disk rotates to the preset speed, the binding assembly actively or passively loosens the fishing net, so that the fishing net opens under the traction of the counterweight to form the net trapping space.

In the above mentioned amphibious netting system, an inner ring side of the float is provided with a float support, and the float support is provided with a rechargeable battery and a power mechanism electrically connected to the rechargeable battery, wherein when the adapter is separated from the clutch connection and the rotating disk floats on a water surface, the power mechanism is used to drive the rotating disk to rotate with respect to the float in a timely manner.

In the above mentioned amphibious netting system, a bottom of the float is provided with a damping baffle, when the rotating disk floats on the water surface through the float and the power mechanism drives the rotating disk, the damping baffle causes the rotating disk to rotate with respect to the float through the reaction force of water.

In the above mentioned amphibious netting system, the float support is provided with a generator for charging the rechargeable battery, the float is a hollow structure and stores fuel oil supplied to the generator.

In the above mentioned amphibious netting system, a plurality of oil separators are evenly spaced inside the float, and the oil separators are provided with slow flow holes for the fuel oil to flow smoothly between adjacent sections of the oil separators.

In the above mentioned amphibious netting system, the free part of the fishing net is provided with a take-up line along a circumferential direction, the free part of the fishing net is provided with a submersible reel for winding the take-up line to close the free part of the fishing net.

In the above mentioned amphibious netting system, the bottom of the float support is equipped with a periscope and/or a sonar fish detector.

In the above mentioned amphibious netting system, the bottom of the float support is equipped with a spotlight and/or a bait box.

In the above mentioned amphibious netting system, the binding assembly comprises an electromagnetic attracting unit and a binding strap that are relatively fixedly connected to an inner side of the rotating disk, one end of the binding strap is relatively fixedly connected to the rotating disk or the electromagnetic attracting unit, and the other end of the binding strap is provided with a magnetic conductive element for magnetic attraction by the electromagnetic attracting unit; or the binding assembly is a binding strap with a VELCRO adhesive structure, the fishing net is folded and bound to the rotating disk by the binding strap, when the rotating disk rotates to the preset speed, the fishing net and the counterweight overcome a VELCRO adhesive force and loosen the fishing net, so that the fishing net opens under the traction of the counterweight to form the net fishing space.

This application also provides an amphibious net fishing system comprising a fishing net and a rotating disk rotatable about about its own central axis, the rotating disk is connected to a float, the fishing net has a connecting part and a free part, the fishing net is connected to the rotating disk through the connecting part, the free part of the fishing net is provided with a counterweight, an outer side of the rotating disk is formed with a tray for carrying the folded fishing net along a circumferential direction, the fishing net is bound to the rotating disk by a binding assembly after being folded and rotates with the rotating disk, the free part of the fishing net and the counterweight are located on an outer side after the fishing net is folded; wherein the amphibious netting system further comprises a rotating column and a flexible drive belt, the rotating column is equipped with a support manipulator for supporting a rotating disk, the rotating disk has an annular groove along a circumference thereof, one end of the flexible drive belt is fixedly connected to the support manipulator and rotates with the rotating column, the other end of the flexible drive belt is used to wrap around the annular groove of the rotating disk located on the support manipulator, wherein when the rotating column drives the support manipulator and the rotating disk to rotate and throw out the rotating disk, the rotating disk rotates under the pull of the flexible drive belt, and when the rotating disk rotates to the preset speed, the binding assembly automatically or passively loosens the fishing net, so that the fishing net opens under the traction of the counterweight to form a net trapping space

In the above mentioned amphibious netting system, the rotating disk is equipped with a turbofan so that the rotating disk accelerates rotation when the rotating disk is in free fall in the air, and when the rotating disk rotates to the preset speed, the binding assembly automatically or passively loosens the fishing net, so that the fishing net opens under the traction of the counterweight to form a net trapping space.

In the above mentioned amphibious netting system, a float is connected to the rotating disk, a central hanger is coaxially connected to an inner side of the rotating disk, a clutch connection part is formed at an upper end of the central hanger.

In the above mentioned amphibious netting system, a tray for supporting a folded fishing net is formed circumferentially on an outer side of the rotating disk.

This application provides a netting method by a fishing net and a rotating disk rotatable about its own central axis, the fishing net has a connecting part and a free part, the fishing net is connected to the rotating disk through the connecting part, the free part of the fishing net is provided with a counterweight, wherein the netting method comprises the following steps:
A, folding the fishing net: after folding the fishing net, the fishing net is tied to the rotating disk by the binding assembly and is allowed to rotate with the rotating disk, wherein after folding, the free part of the fishing net and the counterweight are located on an outside;
B, dropping: the rotating disk and fishing net are dropped into an airspace above a destination via an aircraft or auxiliary mechanism;
C, casting the fishing net: after the rotating disk is above the destination or falls into water, the rotating disk rotates about its central axis, when the rotating disk rotates to the preset speed, the binding assembly automatically or passively loosens the fishing net, the counterweight flies out along a circumferential tangential direction of the rotating disk, so that the fishing net opens under the traction of the counterweight to form a net trapping space;
D, retrieving the fishing net: using the aircraft to directly lift the rotating disk and the fishing net to the predetermined position and lower the rotating disk and the fishing net; alternatively, first using the fishing boat to pull the fishing net to surround the fishing net, and then using the aircraft to lift the rotating disk and the fishing net to a predetermined position and lower the rotating disk and the fishing net; alternatively, using the aircraft to lift the rotating disk and the fishing net to connect with a hoisting device lowered by a fishing boat, and then using a winch on the fishing boat to lift the rotating disk and the fishing net to the predetermined position on the fishing boat and lower the rotating disk and the fishing net.

In the above mentioned amphibious netting method, the aircraft in the step B is a coaxial multi-rotor aircraft, during the process of the coaxial multi-rotor aircraft carrying the rotating disk and the fishing net to the destination, the rotating disk and the fishing net rotate accordingly with the coaxial multi-rotor aircraft; when the coaxial multi-rotor aircraft reaches the airspace above the destination, and the rotation speed of the rotating disk and the fishing net driven by the coaxial multi-rotor aircraft reaches the preset speed, the coaxial multi-rotor aircraft hovers and rotates in place, driving the rotating disk to rotate about its central axis, at the same time, the binding assembly automatically or passively releases the fishing net, and the counterweight flies out along the circumferential tangential direction of the rotating disk, so that the fishing net opens under the traction of the counterweight to form the net trapping space.

Alternatively, the aircraft is a coaxial multi-rotor aircraft, during the flight of the coaxial multi-rotor aircraft carrying the rotating disk and the fishing net to the destination, the rotating disk and the fishing net rotate accordingly with the coaxial multi-rotor aircraft, when the coaxial multi-rotor aircraft reaches the airspace above the destination, and the rotation speed of the rotating disk and the fishing net driven by the coaxial multi-rotor aircraft reaches the preset speed, the coaxial multi-rotor aircraft hovers and rotates in place, driving the rotating disk to rotate about its central axis, the coaxial multi-rotor aircraft is separated from the rotating disk, and the rotating disk and the fishing net rotate at an initial speed of rotating around its central axis, at the same time, the binding assembly automatically or passively releases the fishing net, and the counterweight flies out along the circumferential tangential direction of the rotating disk, so that the fishing net opens under the traction of the counterweight to form the net trapping space.

Alternatively, the aircraft is a multi-rotor aircraft, when the multi-rotor aircraft flies to the destination carrying the rotating disk and the fishing net, when the multi-rotor aircraft reaches the airspace above the destination, the multi-rotor aircraft hovers in place and drives the rotating disk and the fishing net to rotate about its central axis at a certain speed through the rotating disk drive mechanism set at the bottom of the multi-rotor aircraft, when the rotating disk and the fishing net reach the preset speed, the binding assembly automatically or passively releases the fishing net, and the counterweight flies out along the circumferential tangential direction of the rotating disk, so that the fishing net opens under the traction of the counterweight to form the net trapping space.

Alternatively, the aircraft is a multi-rotor aircraft, during the flight of the multi-rotor aircraft carrying the rotating disk and the fishing net to the destination, the rotating disk and the fishing net are driven to rotate by the rotating disk drive mechanism set at the bottom of the multi-rotor aircraft, when the multi-rotor aircraft reaches the airspace above the destination, and the rotating disk and the fishing net rotate about the central axis and have an initial speed, the multi-rotor aircraft is separated from the rotating disk, at the same time, the binding assembly automatically or passively releases the fishing net, and the counterweight flies out along the circumferential tangential direction of the rotating disk, so that the fishing net opens under the traction of the counterweight to form the net trapping space.

In the above mentioned amphibious netting method, the aircraft in the step B is a coaxial multi-rotor aircraft, during the process of the coaxial multi-rotor aircraft carrying the rotating disk and the fishing net to the destination, the rotating disk and the fishing net rotate accordingly with the coaxial multi-rotor aircraft, when the coaxial multi-rotor aircraft reaches the airspace above the destination, the rotating disk has a certain rotation speed around its central axis, the coaxial multi-rotor aircraft is separated from the rotating disk; during the free fall motion of the rotating disk, the rotating disk is accelerated to rotate by a built-in turbofan, when the rotating disk rotates to the preset speed, the binding assembly automatically or passively releases the fishing net, the counterweight flies out along the circumferential tangential direction of the rotating disk, so that the fishing net opens under the traction of the counterweight to form the net trapping space.

Alternatively, the aircraft is a multi-rotor aircraft, when the multi-rotor aircraft flies to the destination airspace carrying the rotating disk and the fishing net, the multi-rotor aircraft is separated from the rotating disk, the rotating disk has a certain rotation speed around its central axis; during the free fall motion of the rotating disk, the rotating disk is accelerated to rotate by a built-in turbofan, when the rotating disk rotates to the preset speed, the binding assembly automatically or passively releases the fishing net, the counterweight flies out along the circumferential tangential direction of the rotating disk, so that the fishing net opens under the traction of the counterweight to form the net trapping space.

In the above mentioned amphibious netting method, in the step B, after the coaxial multi-rotor aircraft flies to the destination carrying the rotating disk and the fishing net, the coaxial multi-rotor aircraft is separated from the rotating disk, the rotating disk and the fishing net fall into the water and float on the water surface through the float, the rotating disk is driven by the power mechanism in time to drive the fishing net to rotate together, when the rotating disk rotates to the preset speed, the binding assembly automatically or passively releases the fishing net, the counterweight flies out along the circumferential tangential direction of the rotating disk, so that the fishing net opens under the traction of the counterweight to form the net trapping space.

Alternatively, the aircraft is a multi-rotor aircraft, after the multi-rotor aircraft flies to the destination carrying the rotating disk and the fishing net, the multi-rotor aircraft is separated from the rotating disk, the rotating disk and the fishing net fall into the water and float on the water surface through the float, the rotating disk is driven by the power mechanism in time to drive the fishing net to rotate together, when the rotating disk rotates to the preset speed, the binding assembly automatically or passively releases the fishing net, the counterweight flies out along the circumferential tangential direction of the rotating disk, so that the fishing net opens under the traction of the counterweight to form the net trapping space.

In the above mentioned amphibious netting method, when the rotating disk and fishing net fall into the water and float on the water surface for a long time through the float, the fuel stored in the inner cavity of the float generates electricity through a generator, and the converted electricity is stored in a rechargeable battery to supply power to the power mechanism.

In the above mentioned amphibious netting method, a number of oil separators are evenly spaced within the float, and the oil separator are provided with slow flow holes for the fuel to flow smoothly between adjacent sections of the oil separators.

In the above mentioned amphibious netting method, a damping baffle is provided at the bottom of the float. When the rotating disk floats on the water surface through the float and the power mechanism drives the rotating disk, the damping baffle causes the rotating disk to rotate with respect to the float through the reaction force of water.

In the above mentioned amphibious netting method, in the step B, the auxiliary mechanism is a rotating column set on the deck of the ship, with a support manipulator connected to the upper end of the rotating column. First, the rotating disk and fishing net are positioned on the outer end of the support manipulator. At the same time, one end of the flexible drive belt is fixedly connected to the support manipulator, and the other end of the flexible drive belt is wrapped around the annular groove of the rotating disk. After the fishing boat sails to the target water area, the rotating column drives the support manipulator and the rotating disk to rotate and throw the rotating disk out. When thrown out, the rotating disk has a certain speed of rotation around its central axis under the pull of the flexible drive belt. When the rotating disk rotates to the preset speed, the binding assembly automatically or passively loosens the fishing net, so that the fishing net opens under the traction of the counterweight to form the net-catching space.

In the above mentioned amphibious netting method, in the step B, the auxiliary mechanism is a rotating column set on the deck of the fishing boat, with a support manipulator connected to the upper end of the rotating column. First, the rotating disk and fishing net are positioned on the outer end of the support manipulator. At the same time, one end of the flexible drive belt is fixedly connected to the support manipulator, and the other end of the flexible drive belt is wrapped around the annular groove of the rotating disk. After the fishing boat sails to the target water area, the rotating column drives the support manipulator and the rotating disk to rotate and throw the rotating disk out. When thrown out, the rotating disk has a certain rotation speed around its central axis under the pull of the flexible drive belt, and the rotating disk is accelerated by its built-in turbofan. When the rotation speed reaches the preset speed, the binding assembly automatically or passively loosens the fishing net, and the counterweight flies out along the circumferential tangential direction of the rotating disk, so that the fishing net opens under the traction of the counterweight to form the ent trapping space.

In the above mentioned amphibious netting method, before the step D of hauling in the fishing net, the underwater reel is activated to wind the take-up line that runs around the free part of the fishing net until the closure of the free part of the fishing net is tightened.

In the above mentioned amphibious netting method, when the controlled aircraft hovers near the water surface, it observes the target fish swarm through a periscope and/or a sonar fish detector. When the target fish swarm enters the ambush zone, the aircraft carries a rotating disk and fishing net to the destination. When the rotating disk reaches a preset speed, the binding component automatically or passively releases the fishing net, and the counterweight flies out along the circumferential tangential direction of the rotating disk. Under the traction of the counterweight, the fishing net opens to form the net trapping space, trapping and capturing the target fish swarm.

In the above mentioned amphibious netting method, when the rotating disk and fishing net fall into the water and float on the surface through the float, the fish are attracted by turning on the spotlight and/or the bait box. After the fish enter the ambush zone, the rotating disk is driven by the power mechanism to rotate the fishing net together and reach the preset speed. The binding component automatically or passively loosens the fishing net, and the counterweight flies out along the circumferential tangential direction of the rotating disk, so that the fishing net opens under the traction of the counterweight to form the net trapping space, thereby trapping and capturing the target fish.

In the above mentioned amphibious netting method, the binding assembly automatically releases the fishing net through the cooperation of an electromagnetic attracting unit and a binding strap. The electromagnetic attracting unit is relatively fixedly connected to the inner side of the rotating disk, one end of the binding strap is relatively fixedly connected to the rotating disk or the electromagnetic attracting unit, and the other end of the binding strap is provided with a magnetic conductive element for the electromagnetic attracting unit to magnetically adsorb.

Alternatively, the binding assembly can use binding straps with a VELCRO adhesive structure to loosen the fishing net. When the rotating disk rotates to a preset speed, the fishing net and the counterweight overcome the VELCRO adhesive force and loosen the fishing net.

In the above mentioned amphibious netting method, after the fishing net is opened to form the net trapping space and traps and captures the target object, the rotating disk feeds back the position information to the terminal through the positioning system and feeds back the capture effect to the terminal. The underwater reel is automatically started to wind the take-up line that runs around the circumference of the free part of the fishing net until the take-up line of the free part of the fishing net is tightened. The aircraft automatically reaches the position of the rotating disk and the fishing net, lifts it up and returns to the starting point, and releases the captured target object.

In the above mentioned amphibious netting method, during the step B, the target object is detected in advance by the aircraft, and the location coordinate information is marked and fed back to the terminal. After analysis and processing, the terminal uses the aircraft or auxiliary mechanism to carry the rotating disk and fishing net to the destination airspace according to the marked location coordinate information to release the fishing net.

In the above mentioned amphibious netting method, a plurality of rotating disks and fishing nets are deployed and spread out to form the net trapping space. The sonar detector on the rotating disks feed back capture information to a terminal. The terminal analyzes and processes the capture information to determine the order of net collection. The aircraft then matches and connects different rotating disks and fishing nets in this order through a central gantry, and then retrieves the rotating disks and fishing nets and flies them to a predetermined position to be lowered.

Compared with the prior art, this application has the following advantages:
1. It is suitable for fast and efficient netting operations on static or dynamic targets on water and land; it can also mark the location coordinates of the target objects detected by the aircraft through GPS or Beidou system and feed them back to the terminal, thereby controlling the aircraft or auxiliary mechanism to cast the rotating disk and fishing net to the location coordinates, so as to achieve targeted fishing;
2. No manual net throwing is required; instead, the fishing net is automatically thrown using the corresponding rotation speed of the rotating disk, reducing the intensity of physical labor;
3. It can accurately cast nets at fixed points over long distances to capture targets, avoiding the inefficient phenomenon of blind casting;
4. When fishing, the applicant should be able to monitor fish swarms in nearby waters using periscopes and sonar fish detectors, and use spotlights and electrically controlled bait boxes to lure and catch fish, thereby improving netting efficiency;
5. This application is applicable to the environmental protection field for the cleanup of solid pollutants floating on rivers, lakes, and seas, especially in waters far from the shore. Its operation is not only highly efficient but also significantly lower in terms of labor and economic costs. Given the current severe problem of solid pollutants floating on rivers, lakes, and seas, and the arduous work of dredging and cleaning, this application is undoubtedly a powerful tool for environmental pollution control;
6. In this application, when the adapter is disengaged from the clutch connection, the rotating disk rotates about its axis to a certain speed and has a fixed axis, thus avoiding serious tilting or overturning of the rotating disk and fishing net, and ensuring reliable net casting;
7. Multiple rotating disks and fishing nets can be deployed and cast. The sonar detectors on the rotating disks can detect the target objects captured by the corresponding nets and send feedback to the terminal. The terminal analyzes and processes the capture information to determine the order of net retrieval for each rotating disk and fishing net, so that the aircraft can lift each rotating disk and fishing net in that order and return to the predetermined position and direction. This achieves a mode of one person operating multiple nets and realizes the goal of efficient operation.

### BRIEF DESCRIPTION OF THE DRAWINGS

The specific embodiments of this application will be further described in detail below with reference to the accompanying drawings, wherein:
FIG. 1 is a schematic view of the fishing net of this application being tied to a rotating disk;
FIG. 2 is a schematic view of the state in which the free part of the fishing net opens outward and downward after the binding assembly of this application is released from the constraint force on the fishing net;
FIG. 3 is a top view of the rotating disk of this application, wherein the rotating disk is equipped with a float and a tray respectively;
FIG. 4 is a cross-sectional view of FIG. 3;
FIG. 5 is a schematic view of the structure of the rotating disk of this application, wherein the rotating disk is equipped with a float, a tray and a turbofan.
FIG. 6 is a front view illustrating the mounting connection between the coaxial rotorcraft and the rotating disk in this application;
FIG. 7 is a top view illustrating the power mechanism provided in the float body for driving the rotating disk to rotate with respect to the float body in this application ;
FIG. 8 is a cross-sectional view of FIG. 7;
FIG. 9 is a schematic view illustrating the connection between the multi-rotor aircraft in this application and the rotating disk of the embodiment in FIG. 5;
FIG. 10 is a schematic view illustrating the structure of the multi-rotor aircraft in this application separated from the rotating disk of the embodiment in FIG. 5;
FIG. 11 is a schematic view illustrating the connection between the multi-rotor aircraft in this application and the rotating disk of the embodiment in FIG. 7;
FIG. 12 is a schematic view illustrating the connection between the coaxial rotorcraft of this application and the rotating disk of the embodiment in FIG. 7;
FIG. 13 is a schematic view illustrating the structure of this application using a rotating column and a support manipulator in conjunction with the rotating disk of the embodiment in FIG. 5;
FIG. 14 is a schematic view showing that the free part of the fishing net of this application is equipped with a take-up line and a submersible reel;
FIG. 15 is an enlarged view of an area A in FIG. 14;
FIG. 16 is a front view of the coaxial rotorcraft and the rotating disk of this application, which can be detachably connected;
FIG. 17 is a schematic view of the state in which the coaxial rotorcraft of this application is separated from the rotating disk.

### DETAILED DESCRIPTION OF THE PREFERRED EMBODIMENT

The embodiments of this application will now be described in detail with reference to the accompanying drawings.

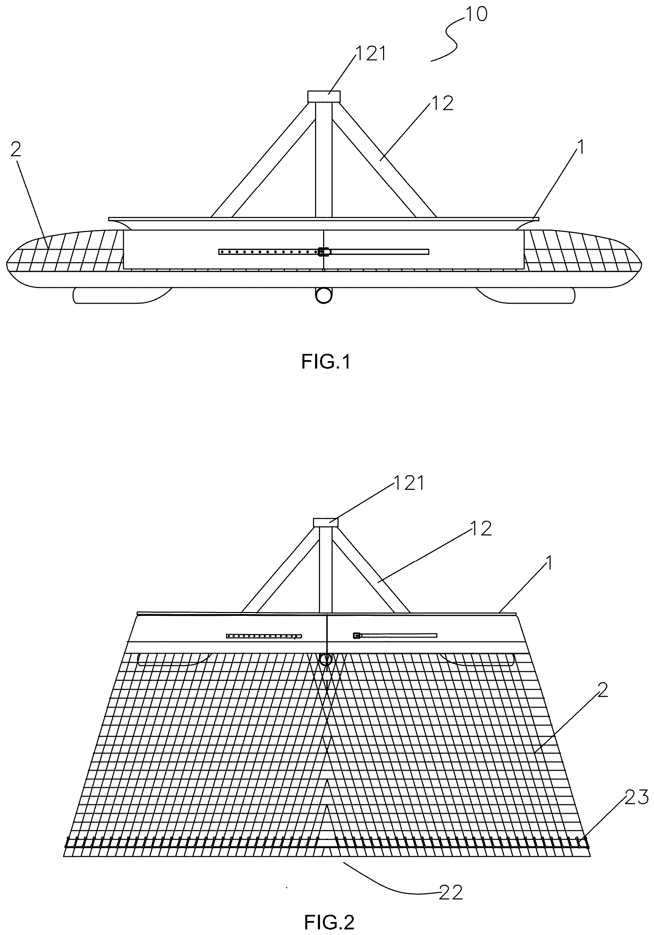

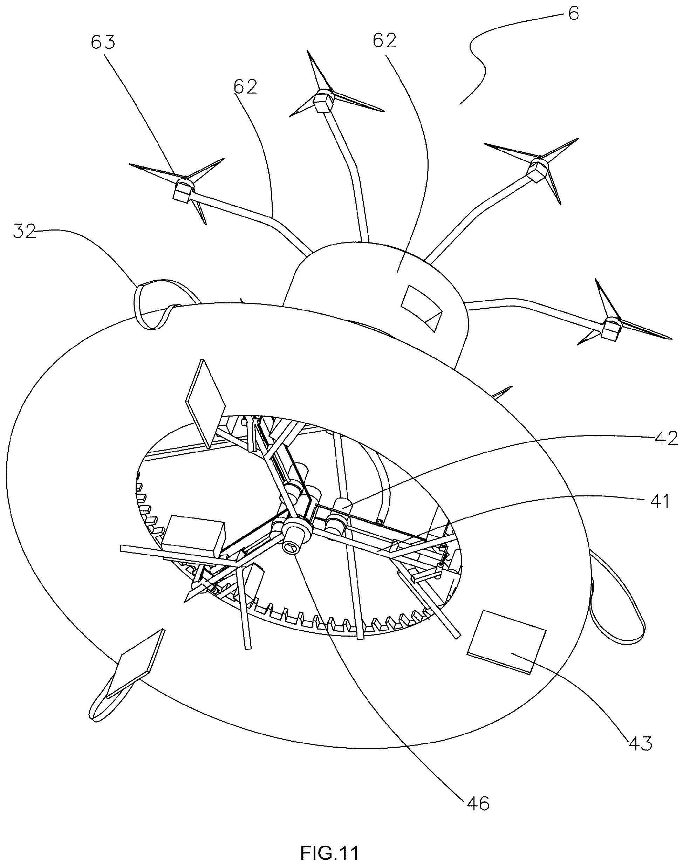

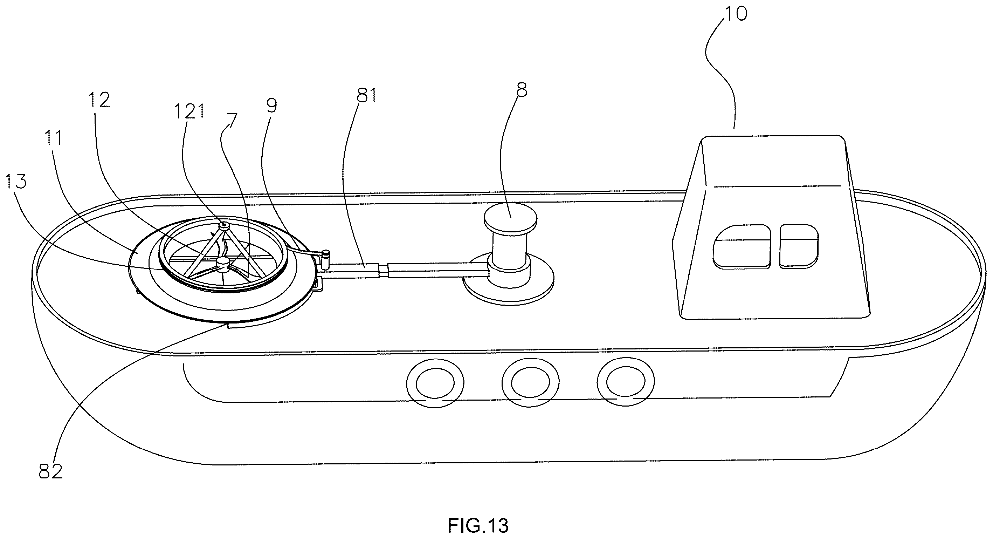

As shown in FIGS. 1 to 17, this application discloses an amphibious netting system that can accurately and efficiently catch predetermined target objects. It is particularly suitable for net-catching operations on water surfaces, and also suitable for catching target objects on open land. The target object can be static or dynamic, whether on water or land. The system comprises a rotating disk 1 and a fishing net 2, the rotating disk 1 can rotate about its own axis. The rotating disk 1 is made of a rigid material, preferably a lightweight aluminum alloy or plastic steel. The fishing net 2 has a connecting part and a free part. The connecting part of the fishing net 2 has a canvas area, and a belt and buckle are provided on the canvas area. After the connecting part of the fishing net 2 is put on the rotating disk, it is fixedly connected to the rotating disk 1 by the cooperation of the belt and buckle. In order to prevent the fishing net 2 from rotating with respect to the rotating disk 1, an anti-slip structure is provided at the position corresponding to the connection between the rotating disk 1 and the canvas area. The free part of the fishing net 2 has a counterweight 21 which can be a lead weight. Before the fishing net is set, the fishing net 2 is folded back and forth in an orderly manner and then tied to the rotating disk 1 by a binding assembly 3 and can rotate with the rotating disk 1. The weight of the folded fishing net 2 is evenly distributed around the circumference of the rotating disk 1 to ensure that the rotating disk 1 is stable during rotation and to avoid vibration and other problems caused by unbalanced forces. In addition, the free part and counterweight 21 of the folded fishing net 2 are located on the outer periphery. When the rotating disk 1 rotates about its central axis to a preset speed, the binding assembly 3 can automatically or passively loosen the fishing net 2. The counterweight 21 flies out along the tangent of the circumference of the rotating disk 1, so that the fishing net 2 opens under the traction of the counterweight 21 to form a net trapping space 22. The fishing net 2 is circular when it is opened, and when the fishing net 2 has spread out to the maximum area, it pulls the rotating disk 1 to reduce the rotation speed.

The binding assembly 3 adopts an automatic release scheme which comprises an electromagnetic attracting unit 31 and a binding strap 32 that are relatively fixedly connected to the inside of the rotating disk 1. One end of the binding strap 32 is fixedly connected to the rotating disk 1 or the electromagnetic attracting unit 31, and the other end of the binding strap 32 is a free end, and is provided with a magnetic conductive element 33 for the electromagnetic attracting unit 31 to magnetically attract. When the fishing net 2 is folded, the binding strap 32 with the magnetic conductive element 33 at one end wraps around the binding fishing net 2 and connects to the electromagnetic attracting unit 31. When the user rotates the rotating disk to a certain speed and it is above the target object, the electromagnetic attracting unit 31 can be demagnetized by remote control, thereby releasing the fishing net 2. Since the rotating disk still maintains a certain speed at this time, the released fishing net 2 opens under the action of centrifugal force.

The binding assembly 3 adopts a passive release scheme. The binding assembly 3 is a binding strap 32 with a VELCRO adhesive structure. After the fishing net is folded, it is bound to the rotating disk 1 by the binding strap 32. When the rotating disk 1 rotates to the preset speed, the fishing net 2 and the counterweight 21 are subjected to centrifugal force to overcome the VELCRO adhesive force until the fishing net 2 is released. Then, the fishing net 2 is opened under the traction of the counterweight 21 to form the fishing net trapping space 22.

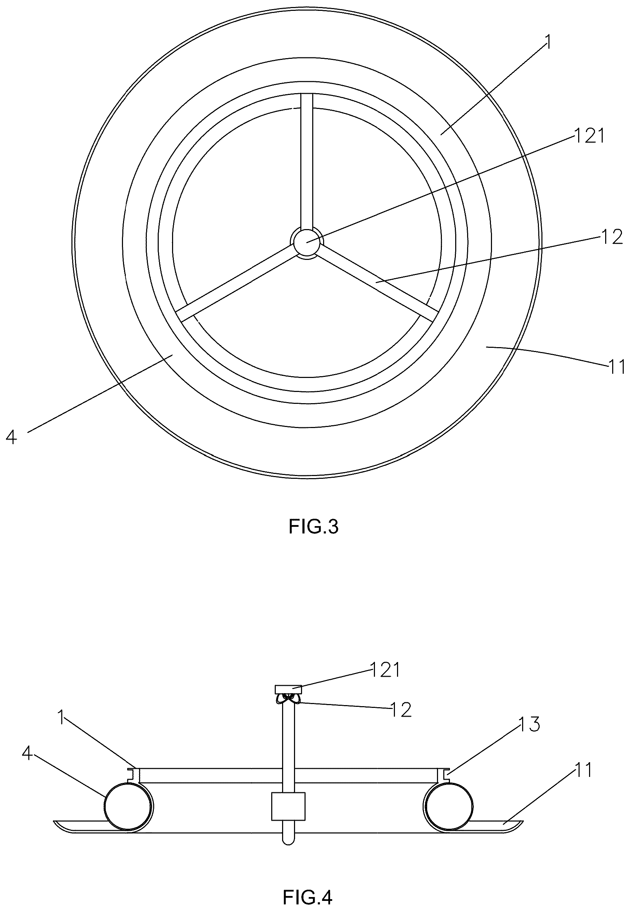

To facilitate the carrying of the folded fishing net 2, as shown in FIGS. 4 to 5, a tray 11 is formed on the outer side of the rotating disk 1 along the circumferential direction, and the outer edge of the tray 11 is raised upward to prevent the folded fishing net 2 from falling apart.

As shown in FIGS. 3 to 13, in order to ensure that the rotating disk 1 can float on the water surface when the fishing net fishing operation is carried out on the water, a float 4 is connected to the rotating disk 1. The float 4 is preferably made of fiberglass, plastic steel or weather-resistant rubber. As one embodiment of the float 4, the float 4 can be a weather-resistant rubber ring that is fitted on the outer circumference of the rotating disk. The rubber ring forms the float 4 after being inflated. Therefore, the connecting part of the fishing net 2 can be fitted onto the rotating disk 1 before the rubber ring is inflated. After the rubber ring is fully inflated, it tightens and connects to the fishing net 2.

During use, casters are provided at the bottom of the rotating disk or the bottom of the float 4 for easy handling. These casters are evenly distributed around the central axis of the rotating disk.

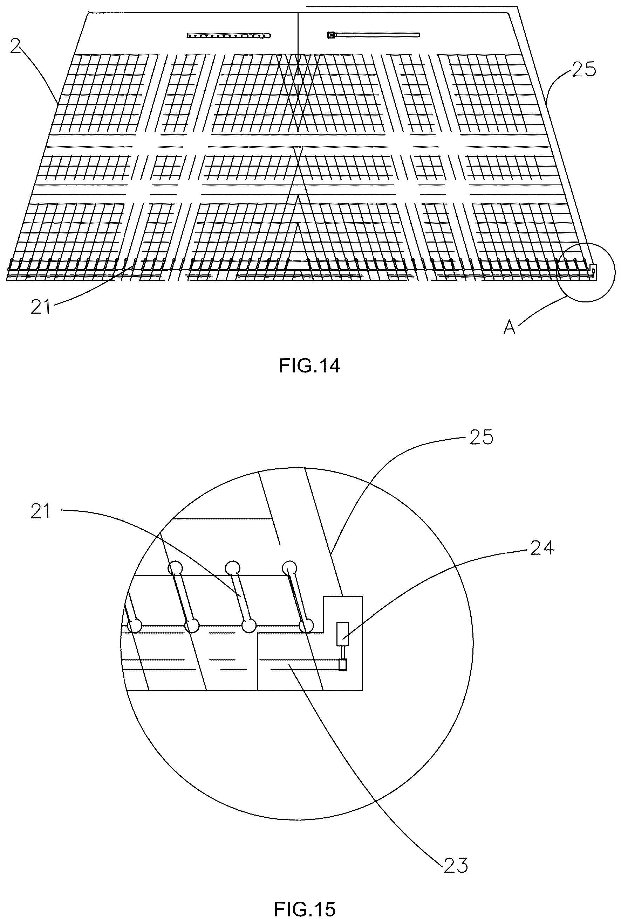

As shown in FIGS. 14 and 15, during surface fishing, to prevent the caught target from slipping through the fishing net during retrieval, a circumferentially threaded take-up line 23 is provided on the free part of the fishing net 2. A submersible reel 24 is also provided on the free part of the fishing net 2 to wind the take-up line 23 and close the free part of the fishing net 2. This submersible reel 24 is electrically connected to the control and power supply on the rotating disk 1 via a wire 25. The wire 25 is larger than the radius of the fishing net 2 to prevent it from being pulled during use. Specifically, the submersible reel 24 comprises a stainless steel low-speed deep-water waterproof DC motor, a built-in controller, a winding reel, and a motor protective cover. The output of the low-speed deep-water waterproof DC motor directly drives the winding reel to rotate. The motor protective cover is inserted into the closing cloth sleeve of the fishing net and connected to the fishing net. Multiple submersible reels 24 can be evenly deployed on the free part of the fishing net as needed. When the fishing net is being cast, the submersible reel 24 also acts as a sinker. Alternatively, the underwater reel 24 can be mounted on a float support 41, with the take-up line 23 extending to the float support and then connecting to the winding spool of the underwater reel 24, which can shorten the length of the wire 25.

After the submersible reel winds up the take-up line to close the fishing net, the rotating disk and fishing net are lifted. Once lifted out of the water, the free part of the fishing net and the take-up line will bear the weight of the trapped object. If the trapped object is heavy, it can easily disrupt the closure. Therefore, it is necessary to optimize the force-bearing structure of the closure by adding a strong, flexible traction cable with a length greater than the diameter of the fishing net when it is open. One end of the strong, flexible traction cable is fixed to the free part of the fishing net on one side of the submersible reel, and the other end passes radially through the center of the fishing net, then is movably threaded through the free part of the fishing net, and finally extends through the fishing net's connecting part and is used to connect to the winch. After the fishing net traps the target object, the submersible reel is first activated to wind up the take-up line to close the fishing net, and then the winch is activated to pull up the free part of the fishing net using the strong, flexible traction cable. This ensures that after the trapped object is lifted, its weight is mainly borne by the strength of the strong, flexible traction cable and the fishing net itself, resulting in reliable net retrieval.

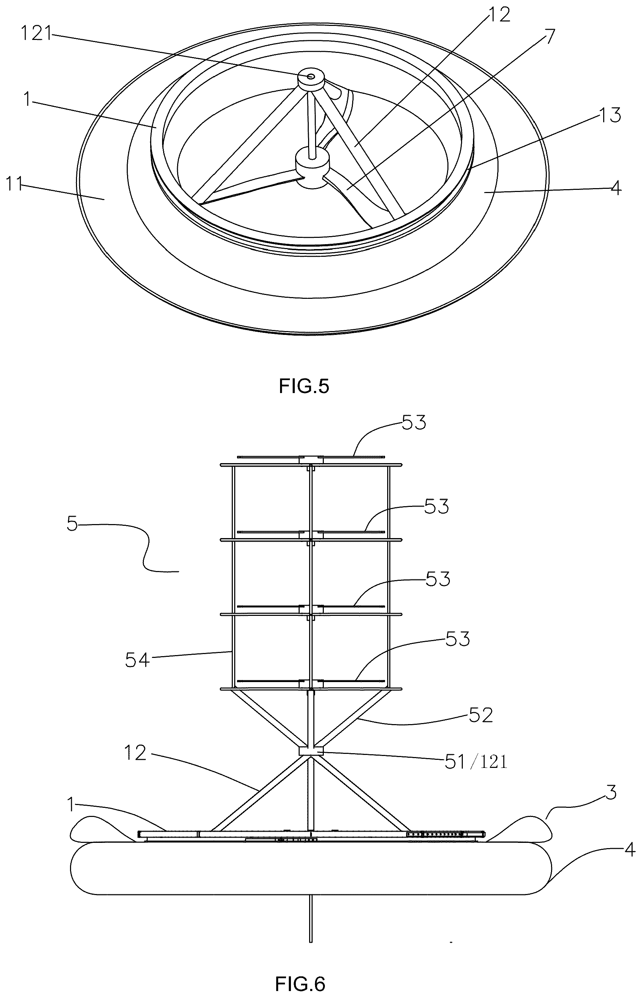

As a first example of this application:
As shown in FIG. 6, a plurality of connecting rods 12 are connected to the inner side of the rotating disk 1 at an upward angle. The connecting rods 12 form a central hanger 10, and the intersection of the upper ends of the connecting rods 12 is located on the axis of the rotating disk 1. The central hanger 10 is coaxially and fixedly connected to a coaxial rotorcraft 5. When the coaxial rotorcraft 5 hovers and rotates in place, it drives the rotating disk 1 to rotate about its central axis. The coaxial rotorcraft 5 comprises a support frame 52 and a plurality of coaxial rotors 53 that are rotatably connected to the support frame 52 and coaxially arranged with the rotating disk. A protective cover 54 for protecting the coaxial rotors 53 is also connected to the support frame 52. The bottom of the support frame 52 is integrally and coaxially fixedly connected to the upper end of the central hanger 10. When in use, the coaxial rotorcraft 5 hovers and spins in place when it approaches the target object, and when the rotating disk 1 reaches the preset speed, the binding assembly 3 automatically or passively releases the fishing net 2, and the counterweight 21 flies out along the circumferential tangential direction of the rotating disk 1, so that the fishing net 2 opens under the traction of the counterweight 21 to form a net trapping space 22.

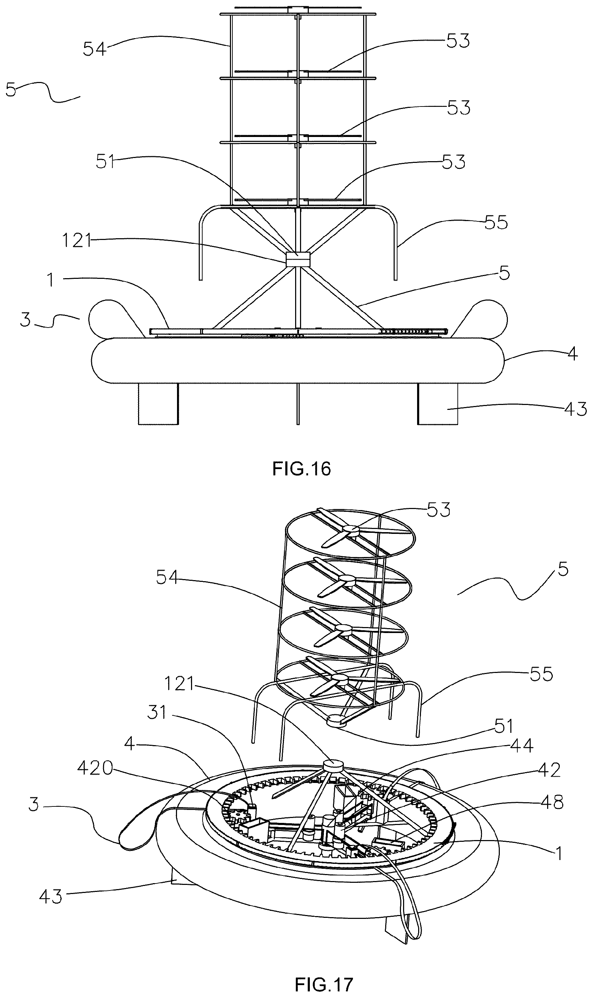

As a second example of this application:
As shown in FIGS. 16 and 17, the rotating disk 1 is connected to the float 4. A plurality of connecting rods 12 are connected to the inner side of the rotating disk 1 at an upward angle. These connecting rods 12 form a central hanger 10, and the intersection of the upper ends of the connecting rods 12 is located on the axis of the rotating disk 1, forming a clutch connection part 121. This embodiment also comprises a coaxial rotorcraft 5 which further comprises an adapter 51 for detachable connection with the clutch connection part 121 and a support foot 55 for landing support, both located on the bottom of the support frame 52. The specific structure of the adapter 51 and the clutch connection part 121 can be a mechanical gripper structure, a suction cup structure, or an electromagnetic adsorption structure. Preferably, the adapter 51 uses an electromagnetic attracting structure, and correspondingly, the clutch connection part 121 uses a magnetically conductive structure. The connecting part 121 is magnetically connected. Since the coaxial rotor 53 and the rotating disk 1 are coaxial, when the coaxial rotor aircraft 5 is flying, the rotating disk 1 is driven to rotate simultaneously through the adapter 51. When the coaxial rotor aircraft 5 flies to its destination, it hovers and rotates in place, driving the rotating disk 1 to rotate about its central axis. As needed, the binding assembly 3 with the electromagnetic attracting unit can be actively released to cast the fishing net to capture the target. For the binding assembly 3 with the VELCRO adhesive structure, it needs to be passively released after the rotating disk 1 reaches the preset speed to cast the fishing net to capture the target. Since the rotating disk reaches a certain speed and has a fixed axis after the adapter 51 is separated from the clutch connecting part 121, the problem of serious tilting or overturning of the rotating disk and fishing net can be avoided, ensuring reliable net casting.

As shown in FIG. 6, as a further improvement of the first example, a turbofan 7 is provided inside the rotating disk 1. When the coaxial rotorcraft 5 flies to the destination, the adapter 51 is separated from the clutch connection part 121. The rotating disk 1, with a certain initial speed, rotates about its central line and has a fixed axis. When it is in free fall in the air, the turbofan 7 causes the rotating disk 1 to accelerate its rotation. When the fixed-axis rotating disk 1 rotates to the preset speed, the fishing net 2 and the counterweight 21 overcome the constraint force of the binding assembly 3 and loosen the fishing net 2. The counterweight 21 flies out along the circumferential tangential direction of the rotating disk, so that the fishing net 2 opens under the traction of the counterweight 21 to form a net trapping space 22. Through the fixed axis of the rotating disk, the fishing net is cast as close to the horizontal plane as possible to ensure the fishing net-casting effect. In specific implementation, a submersible sonar fish swarm detector enters the fishing net trapping area to detect the fish swarm situation, and then sends the fish swarm information at the fishing net trapping area to the corresponding ship.

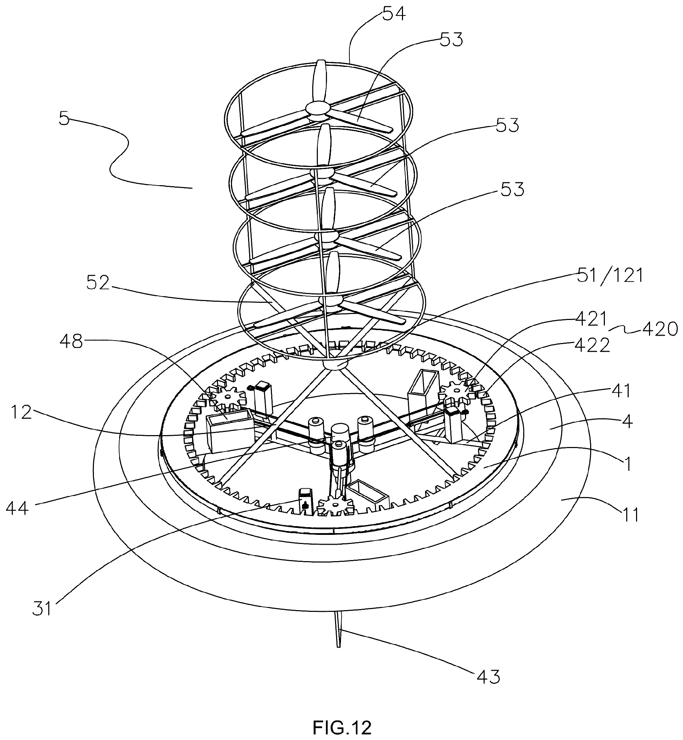

As shown in FIG. 12, as another improvement to this embodiment, so that the fishing net can be automatically cast directly when floating on the water surface for netting, the rotating disk 1 and the float 4 are rotatably connected, that is, the rotating disk 1 and the float 4 are provided with T-shaped grooves and T-shaped guide rails that are slidably connected to each other, and the rotating disk 1 is placed on the upper part of the float 4; the inner ring of the float 4 is provided with a float support 41, and the float support 41 is provided with a rechargeable battery 42 and a power mechanism 420 electrically connected to the rechargeable battery 42. The power mechanism 420 comprises a power drive motor with a drive gear 421 at the power output end and an internal gear ring 422 provided in the circumferential direction of the inner ring of the rotating disk 1. According to the design and force balance requirements, three power drive motors distributed at 120° are provided on the float support 41, and the drive gears 421 on them are all meshed with the internal gear ring 422.

When the adapter 51 is separated from the clutch connection part 121, the power mechanism 420 is used to drive the rotating disk 1 to rotate with respect to the float 4. The bottom of the float 4 is provided with a damping baffle 43. When the rotating disk 1 floats on the water surface through the float 4 and the power mechanism 420 drives the rotating disk 1, the damping baffle 43 causes the rotating disk 1 to rotate with respect to the float 4 through the reaction force of the water.

In use, the coaxial rotorcraft 5 carries the rotating disk 1, which has been folded and tied with a fishing net, and flies to the destination. Then, the control adapter 51 is separated from the clutch connection 121, and the rotating disk 1 falls and floats on the water. When the target object appears, the power mechanism 420 is activated to drive the rotating disk 1 to a preset speed and release the fishing net, so that it opens to form a net trapping space 22 to surround the target object. Then, the submersible reel 24 is used to close the fishing net. Finally, the coaxial rotorcraft 5 is controlled to connect the adapter 51 and the clutch connection 121 to lift the rotating disk and the fishing net and fly to the predetermined position.

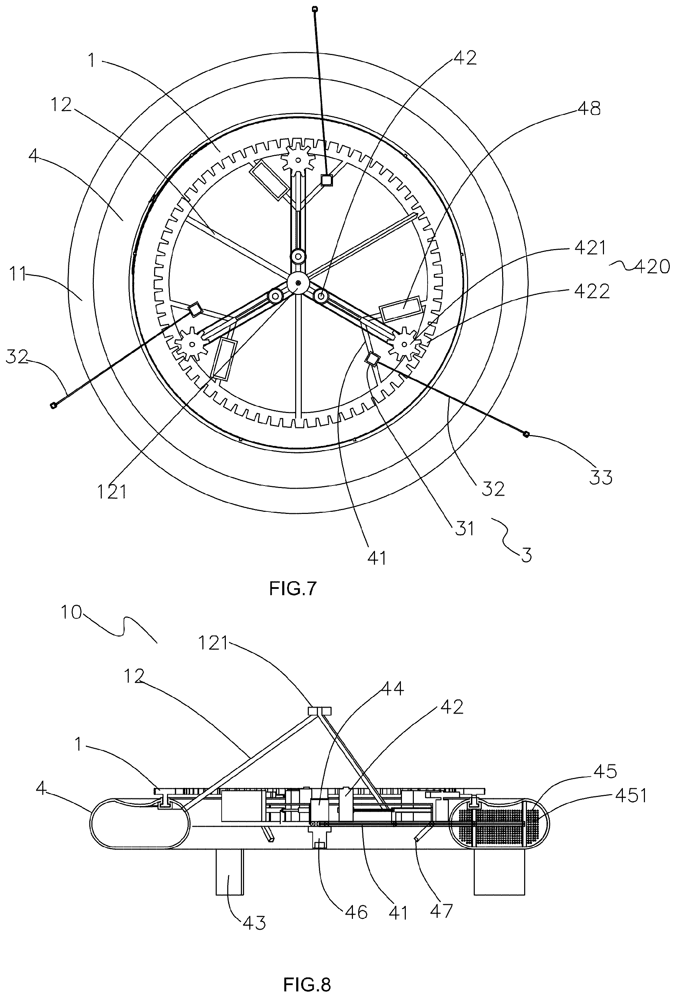

As shown in FIG. 8, in this embodiment, the float support 41 is equipped with a generator 44 for charging the rechargeable battery 42. The float 4 has a hollow structure and can store fuel supplied to the generator 44. By configuring fuel, generator and corresponding charger, it is possible to prepare for long-distance fishing at sea, with the fuel stored in the float cavity. In addition, a plurality of oil separators 45 are evenly spaced inside the float 4. The oil separators 45 are provided with slow flow holes 451 for the fuel to flow smoothly between adjacent sections of the oil separators 45. The slow flow holes 451 are relatively small holes. The purpose of setting the oil separators is to prevent the float from tilting during takeoff and flight, which would cause it to sway in the float cavity and affect the stability of the flight. The purpose of making slow flow holes 451 on the oil separators is to keep the fuel in the adjacent isolation sections in a state of fine flow at all times, so as to maintain balance.

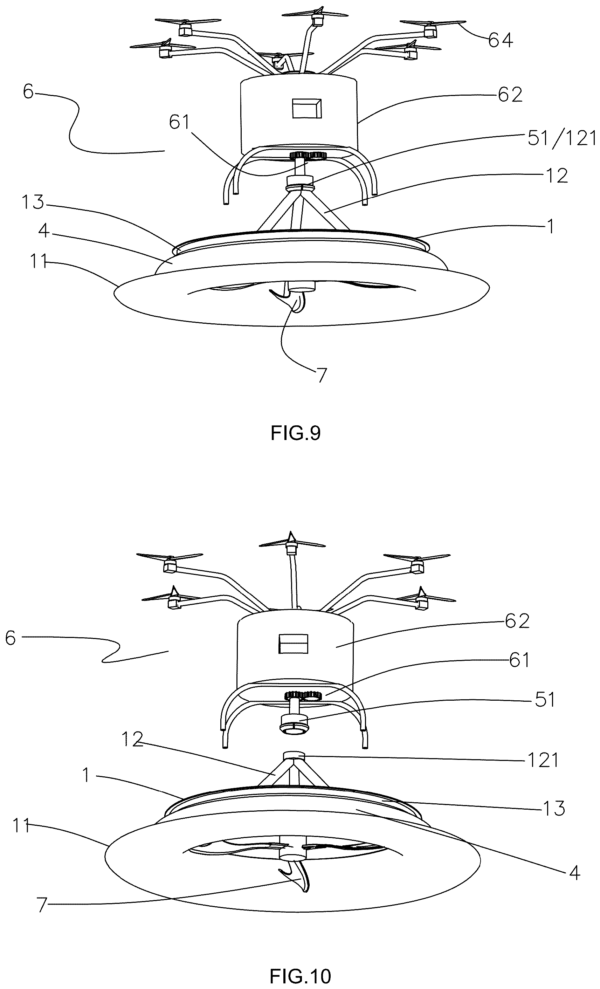

As a third example of this application:
As shown in FIGS. 9 and 10, a float 4 is connected to the rotating disk 1. A plurality of connecting rods 12, forming a hanger, are connected to the inner side of the rotating disk 1 at an upward angle. The intersection of the upper ends of the connecting rods 12 is located on the axis of the rotating disk 1, forming a clutch connection part 121. This embodiment comprises a multi-rotor aircraft 6 which comprises a connecting base 62. The upper part of the connecting base 62 has a circumferential array of a plurality of outwardly extending support rods 63. Each support rod 63 is connected to an eccentric rotor 64, that is, the rotation axis of all eccentric rotors 64 is eccentric to the central rotation axis of the rotating disk. A rotating disk drive mechanism 61 is provided extending from the bottom of the connecting base 62. The rotating disk drive mechanism 61 comprises a motor placed inside the connecting base 62 and a gear on the output shaft of the motor to mesh with a gear connected to an adapter 51. The multi-rotor aircraft 6 is connected to the clutch connection part 121 through the adapter 51 and drives the rotating disk 1 to rotate through the rotating disk drive mechanism 61.

In use, the multi-rotor aircraft 6 carries the fishing net 2, which is folded and tied to the rotating disk 1, and flies to the destination. The rotating disk drive mechanism 61 drives the rotating disk 1 to rotate. As needed, the binding assembly 3 can automatically or passively loosen the fishing net 2, so that the fishing net 2 opens under the traction of the counterweight 21 to form a net trapping space 22 for netting the target object.

As a further improvement of third example, as shown in FIGS. 8 and 9, a turbofan 7 is provided inside the rotating disk 1 so that after the adapter 51 is separated from the clutch connection part 121, the rotating disk 1 with a certain initial speed rotates about its central line and has a fixed axis. When it is in free fall in the air, it accelerates its rotation. When the rotating disk 1 rotates to the preset speed, the fishing net 2 and the counterweight 21 overcome the constraint force of the binding assembly 3 and loosen the fishing net 2, so that the fishing net 2 opens under the traction of the counterweight 21 to form the fishing net trapping space 22.

As another improvement to the third example, the inner ring of the float 4 is provided with a float support 41. The float support 41 is provided with a rechargeable battery 42 and a power mechanism 420 electrically connected to the rechargeable battery 42. When the adapter 51 is separated from the clutch connection part 121, the power mechanism 420 is used to drive the rotating disk 1 to rotate with respect to the float 4. This scheme is used for a multi-rotor aircraft 6 to carry the rotating disk 1, which has been folded and tied with a fishing net, to the destination. Then, the adapter 51 is controlled to separate from the clutch connection part 121, and the rotating disk 1 falls and floats on the water surface. When the target object appears, the power mechanism 420 is activated to drive the rotating disk 1 to a preset speed and release the fishing net, so that it opens to form a net trapping space 22 to surround the target object. Then, the underwater reel 24 is used to close the fishing net. Finally, the multi-rotor aircraft 6 is controlled to connect the adapter 51 and the clutch connection part 121 to lift the rotating disk and the fishing net and fly to the predetermined position.

In another improved third example, the function and effect are the same as in another improved second example. That is, the bottom of the float 4 is also provided with a damping baffle 43. When the rotating disk 1 floats on the water surface through the float 4 and the power mechanism 420 drives the rotating disk 1, the damping baffle 43 causes the rotating disk 1 to rotate with respect to the float 4 through the reaction force of the water. A generator 44 for charging the rechargeable battery 42 is provided on the float support 41. The float 4 has a hollow structure and stores fuel supplied to the generator 44, enabling it to operate at long distances. A plurality of oil separators 45 are evenly spaced inside the float 4. The oil separators 45 are provided with slow flow holes 451 for the fuel to flow smoothly between adjacent sections of the oil separators 45.

As a fourth example of this application:
This embodiment differs from the previous embodiment in that it comprises a rotating column 8 and a flexible drive belt 9. The rotating column 8 is rotatably connected to the ship deck. A support manipulator 81 is provided on the upper part of the rotating column 8. The upper end of the support manipulator 81 has an annular insertion opening 82 for supporting the rotating disk 1. When the rotating column 8 is controlled to rotate, the support manipulator 81 rotates accordingly. An annular groove 13 is provided on the rotating disk 1 along its circumference. One end of the flexible drive belt 9 is a fixed end and is fixedly connected to the support manipulator 81 and rotates with the rotating column 8. The other end of the flexible drive belt 9 is a free end used to wrap around the annular groove 13. When the rotating column 8 drives the support manipulator 81 to rotate instantly, the rotating disk 1 on the support manipulator 81 is thrown out accordingly. At the same time, the flexible drive belt 9 pulls the rotating disk 1 to make it rotate and fly out. When the rotating disk 1 rotates to the preset speed, the fishing net 2 and the counterweight 21 overcome the binding force of the binding assembly 3 and loosen the fishing net 2, so that the fishing net 2 opens under the traction of the counterweight 21 to form the fishing net trapping space 22.

As an improvement to this embodiment, the rotating disk 1 is equipped with a turbofan 7 which accelerates the rotation of the rotating disk 1 during free fall in the air after the initial rotation speed. It is also equipped with a wireless controller. When the rotating disk 1 rotates to the preset rotation speed, the fishing net 2 and the counterweight 21 overcome the constraint force of the binding assembly 3 and loosen the fishing net 2. The fishing net 2 is then opened under the traction of the counterweight 21 to form a net trapping space 22. In specific implementation, a submersible sonar fish swarm detector enters the fishing net catching area to detect the fish swarm situation, and then sends the fish swarm information at the fishing net catching area to the corresponding ship.

In the above first, second, third and fourth examples, for small-scale fish harvesting, the coaxial rotorcraft 5 or multi-rotorcraft 6 can take off directly, slide, and pull the fishing net, allowing the fish to enter the fishing net's swirling area at the end. Then, it takes off again, returns to the ship deck, lowers, and hovers, where the fish are manually removed and placed in a fish basket. For large-scale fish harvesting, the coaxial rotorcraft 5 or multi-rotorcraft 6 cannot be directly lifted and flown. In this case, the ship can wait for a large-area seine net to be used to trap the fish pre-trapped in the fishing net. After the large net has completely enclosed the area, the coaxial rotorcraft 5 or multi-rotorcraft 6 can take off again, pulling out a small number of fish and flying them back to the ship's deck. Before the next netting operation, the fishing net is folded again and secured to the rotating disk using the binding assembly 3, with the folded net supported by a tray to prevent it from scattering.

In order to effectively monitor the target object before net fishing, this application provides a periscope and/or sonar fish detector 46 at the bottom of the float support 41. When the coaxial rotorcraft 5 or multi-rotorcraft 6 carries the rotating disk 1 with the fishing net folded and tied, it flies to the destination and hovers. The rotating disk is on or near the water surface. First, the periscope or sonar fish detector is lowered. The periscope or sonar fish detector is controlled by a miniature winch to raise and lower the altitude. When a school of fish is found to be gathering in the water below the rotating disk, the image of the gathering school of fish can be seen visually on the handheld mobile control terminal. Then, it can take off and hover to rotate for net casting; or the control adapter 51 is separated from the clutch connection 121, and the power mechanism 420 is started to drive the rotating disk 1 to a preset speed, and the fishing net is loosened and opened to form a net fishing space 22 to surround the target object.

Furthermore, the bottom of the float support 41 of this application is provided with a spotlight 47 and/or a bait box 48. When the coaxial rotorcraft 5 or multi-rotorcraft 6 carries the rotating disk 1 with the fishing net folded and tied, flies to the destination and floats in the water, and the periscope or sonar fish detector does not find any fish, bait can be placed in the bait box 48 and/or the spotlight 47 can be turned on to attract fish for trapping.

In this application, a turbofan 7 is installed inside the rotating disk 1. The main purpose is to ensure that when the coaxial rotorcraft 5 or multi-rotorcraft 6, carrying the rotating disk 1 with a fishing net attached, separates from the rotating disk upon reaching its destination, the fishing net remains attached. Therefore, the rotating disk 1 needs to continue rotating faster. The turbofan 7 can accelerate the rotating disk 1, which is in free fall. Specifically, the angle of the windward face of the turbofan 7 blades gradually changes, guiding the airflow towards the central shaft hole at the intersection of the blades of the turbofan 7. In this application, the blades of the turbofan 7 have relatively high thickness and moderate relative curvature; the leading edge of the blades is relatively thick and rounded to reduce aerodynamic losses and drag, while the trailing edge is relatively thin and sharp to reduce turbulence generation and improve the overall quality of the airflow.

Furthermore, the airfoil thickness of the blades varies with distance from the blade root; specifically, it is thicker at the root to withstand greater loads and rotational speeds, and thinner at the tip to reduce drag and improve flow field distribution. Additionally, the leading-edge airfoil of the blades in this application has a smaller radius of curvature on its upper surface to generate a higher suction effect, which helps improve the lift and efficiency of the blades. The trailing edge of the blades has a certain curvature, called trailing-edge camber, which reduces peak drag and turbulence generation, improving the aerodynamic performance of the blades.

In addition, to facilitate net capture operations, the rotating disk in this application is equipped with wireless communication and satellite positioning signals for tracking and positioning. Furthermore, the coaxial rotorcraft 5 or multi-rotorcraft 6, which require collaborative operation, may also meet the following performance requirements.
1. Load capacity greater than 150KG, and strong wind resistance;
2. Equipped with real-time data transmission capability;
3. Equipped with safety measures including low voltage protection and automatic return in case of fault;
4. Equipped with BeiDou and/or GPS satellite navigation systems;
5. The flight control system comprises attitude sensors, position sensors, and environmental sensors, and can fly autonomously along a flight path and change flight paths in real time.
6. Equipped with airborne and ground terminals, with a wireless transmission communication distance of over 10 kilometers;
7. Equipped with a flight mission trajectory management platform, as well as a monitoring and real-time image transmission system.

This application discloses a netting method that can accurately and efficiently capture predetermined target objects. It is particularly suitable for net-catching operations on water surfaces, and also suitable for net-catching targets on open land. The target object, whether on water or land, can be a static or dynamic object. It employs an amphibious netting system which comprises a rotating disk 1 that can rotate about its own axis and a fishing net 2. The rotating disk 1 is made of a rigid material, preferably a lightweight aluminum alloy or plastic steel. The fishing net 2 has a connecting part and a free part. The connecting part of the fishing net 2 has a canvas area, and a belt and buckle are provided on the canvas area. After the connecting part of the fishing net 2 is put on the rotating disk, it is fixedly connected to the rotating disk 1 by the cooperation of the belt and buckle. In order to prevent the fishing net 2 from rotating with respect to the rotating disk 1, an anti-slip structure is provided at the position corresponding to the connection between the rotating disk 1 and the canvas area. The free part of the fishing net 2 has a counterweight 21, which is a lead weight. Before the fishing net is set, the fishing net 2 is folded back and forth in an orderly manner and then tied to the rotating disk 1 by the binding assembly 3 and can rotate with the rotating disk 1. The weight of the folded fishing net 2 is evenly distributed around the circumference of the rotating disk 1 to ensure that the rotating disk 1 is stable during rotation and to avoid vibration and other problems caused by unbalanced forces. In addition, the free part and counterweight 21 of the folded fishing net 2 are located on the outer periphery. When the rotating disk 1 rotates to the preset speed, the binding assembly 3 can automatically or passively loosen the fishing net 2. The counterweight 21 flies out along the tangent of the circumference of the rotating disk 1, so that the fishing net 2 opens under the traction of the counterweight 21 to form a net trapping space 22. The fishing net 2 is circular when it is opened, and when the fishing net 2 has spread out the maximum area, it pulls the rotating disk 1 to reduce the rotation speed.

This application discloses a netting method comprising the following steps.
A. Folding the fishing net: After folding the fishing net 2, it is tied to the rotating disk 1 by the binding assembly 3 and can rotate with the rotating disk 1. After folding, the free part of the fishing net 2 and the counterweight 21 are located on the outside.
B. Deployment: The rotating disk 1 and the fishing net are deployed to the destination via an aircraft or auxiliary mechanism.
C. Casting the fishing net: After the rotating disk 1 is above the destination or falls into the water, the rotating disk 1 rotates about its central axis. When the rotation speed reaches the preset speed, the binding assembly 3 automatically or passively loosens the fishing net 2. The counterweight 21 flies out along the circumferential tangential direction of the rotating disk 1, so that the fishing net 2 opens under the traction of the counterweight 21 to form a net trapping space 22.
D. Net hauling: The aircraft directly lifts the rotating disk 1 and fishing net 2 to the predetermined position and lowers them; or the fishing boat first uses a net to trap the fishing net 2, and then the aircraft lifts the rotating disk 1 and fishing net to the predetermined position and lowers them; or the aircraft lifts the rotating disk 1 and fishing net 2 to the connection point of the lowered hoisting device of the fishing boat, and then the winch on the fishing boat lifts the rotating disk 1 and fishing net 2 to the predetermined position on the fishing boat and lowers them.

In the step C, the binding assembly 3 adopts an automatic release scheme which comprises an electromagnetic attracting unit 31 and a binding strap 32 that are relatively fixedly connected to the inner side of the rotating disk 1. One end of the binding strap 32 is fixedly connected to the rotating disk 1 or the electromagnetic attracting unit 31, and the other end of the binding strap 32 is a free end, and is provided with a magnetic conductive element 33 for the electromagnetic attracting unit 31 to magnetically attract. After the fishing net 2 is folded, the binding strap 32 with the magnetic conductive element 33 at one end wraps around the binding fishing net 2 and connects to the electromagnetic attracting unit 31. When the user rotates the rotating disk to a certain speed and it is above the target object, the electromagnetic attracting unit 31 can be demagnetized by remote control, thereby releasing the fishing net 2. Since the rotating disk still maintains a certain speed at this time, the released fishing net 2 opens under the action of centrifugal force.

In the step C, the binding assembly 3 adopts a passive release scheme. The binding assembly 3 is a binding strap 32 with a VELCRO adhesive structure. After the fishing net is folded, it is bound to the rotating disk 1 by the binding strap 32. When the rotating disk 1 rotates to the preset speed, the fishing net 2 and the counterweight 21 are subjected to centrifugal force to overcome the VELCRO adhesive force until the fishing net 2 is released. Then, the fishing net 2 is opened under the traction of the counterweight 21 to form the fishing net trapping space 22.

To facilitate the carrying of the folded fishing net 2, as shown in FIGS. 4 to 5, a tray 11 is formed on the outer side of the rotating disk 1 along the circumferential direction, and the outer edge of the tray 11 is raised upward to prevent the folded fishing net 2 from falling apart.

As shown in FIG. 3 to 13, in order to ensure that the rotating disk 1 can float on the water surface when netting operations are carried out on the water, a float 4 is connected to the rotating disk 1. The float 4 is preferably made of fiberglass, plastic steel or weather-resistant rubber. As one embodiment of the float 4, the float 4 can be a weather-resistant rubber ring that is fitted onto the outer circumference of the rotating disk. The rubber ring forms the float 4 after being inflated. Therefore, the connecting part of the fishing net 2 can be fitted onto the rotating disk 1 before the rubber ring is inflated. After the rubber ring is fully inflated, it tightens and connects to the fishing net 2.

During use, casters are provided at the bottom of the rotating disk or the bottom of the float 4 for easy handling. These casters are evenly distributed around the central axis of the rotating disk.

As shown in FIGS. 14 and 15, during water operations, in order to prevent the fishing net from missing any target objects during the fishing net retrieval process, before step D (retrieval), the opening of the free portion of the fishing net 2 is tightened. A circumferential take-up line 23 is threaded through the free portion of the fishing net 2, and a submersible reel 24 is provided on the free portion of the fishing net 2 for winding the take-up line 23 to tighten the opening. This submersible reel 24 is electrically connected to the control and power supply on the rotating disk 1 via a wire 25. The wire 25 is larger than the radius of the fishing net 2 to prevent it from being pulled during use. Specifically, the submersible reel 24 comprises a stainless steel low-speed deep-water waterproof DC motor, a built-in controller, a winding reel, and a motor protective cover. The output of the low-speed deep-water waterproof DC motor directly drives the winding reel to rotate. The motor protective cover is inserted into the retrieval sleeve of the fishing net and connected to the fishing net. Multiple submersible reels 24 can be evenly deployed on the free portion of the fishing net as needed. When the fishing net is being cast, the submersible reel 24 also acts as a sinker. Alternatively, the underwater reel 24 can be mounted on the float support 41, with the take-up line 23 extending to the float support and connecting to the winding spool of the underwater reel 24, thereby shortening the length of the wire 25.

After the submersible reel winds the take-up line to close the fishing net, the rotating disk and fishing net are lifted. Once lifted out of the water, the free part of the fishing net and the take-up line will bear the weight of the trapped object. If the trapped object is heavy, it can easily disrupt the closing effect. Therefore, it is necessary to optimize the force-bearing structure of the closing by adding a strong, flexible traction cable with a length greater than the diameter of the fishing net when it is open. One end of the strong, flexible traction cable is fixedly connected to the free part of the fishing net on one side of the submersible reel, and the other end passes radially through the center of the fishing net, then is movably threaded through the free part of the fishing net, and finally extends through the connecting part of the fishing net and is used to connect to the winch. After the fishing net traps the target object, the submersible reel is first activated to wind the take-up line to close the fishing net, and then the winch is activated to pull up the free part of the fishing net using the strong, flexible traction cable. This ensures that after the trapped object is lifted, its weight is mainly borne by the strength of the strong, flexible traction cable and the fishing net itself, resulting in reliable net retrieval.

In this method, the rotating disk 1 and the fishing net are launched to the destination via an aircraft or auxiliary mechanism. The aircraft can be a coaxial multi-rotor aircraft 5 or a multi-rotor aircraft 6. Alternatively, the aircraft can detect and identify the target object in advance using a camera, periscope, or sonar detector. When the rotating disk 1 and the fishing net 2 are delivered to the destination, the rotating disk 1 reaches a preset speed, and the binding assembly 3 automatically or passively releases the fishing net 2. The counterweight 21 flies out along the circumferential tangential direction of the rotating disk 1, so that the fishing net 2 opens under the traction of the counterweight 21 to form a net trapping space 22, thereby trapping and capturing the target fish.

As an example of the method in this application, the aircraft adopts a coaxial multi-rotor aircraft 5.

As shown in FIG. 6, a plurality of connecting rods 12 are connected to the inner side of the rotating disk 1 at an upward angle. The connecting rods 12 form a central hanger 10, and the intersection of the upper ends of the connecting rods 12 is located on the axis of the rotating disk 1. The central hanger 10 is coaxially and fixedly connected to the coaxial rotorcraft 5. When the coaxial rotorcraft 5 hovers and rotates in place, it drives the rotating disk 1 to rotate about its central axis. The coaxial rotorcraft 5 comprises a support frame 52 and a plurality of coaxial rotors 53 that are rotatably connected to the support frame 52 and coaxially arranged with the rotating disk. A protective cover 54 for protecting the coaxial rotors 53 is also connected to the support frame 52. The bottom of the support frame 52 is integrally and coaxially fixedly connected to the upper end of the central hanger 10. When in use, the coaxial rotorcraft 5 hovers and spins in place when it approaches the target object, and when the rotating disk 1 reaches the preset speed, the binding assembly 3 automatically or passively releases the fishing net 2, and the counterweight 21 flies out along the circumferential tangential direction of the rotating disk 1, so that the fishing net 2 opens under the traction of the counterweight 21 to form a net trapping space 22.

As shown in FIGS. 16 and 17, the rotating disk 1 is connected to the float 4. A plurality of connecting rods 12 are connected to the inner side of the rotating disk 1 at an upward angle. These connecting rods 12 form a central hanger 10, and the intersection of the upper ends of the connecting rods 12 is located on the axis of the rotating disk 1, forming a clutch connection part 121. This embodiment also comprises a coaxial rotorcraft 5 which further comprises an adapter 51 for detachable connection with the clutch connection part 121 and a support foot 55 for landing support, both located on the bottom of the support frame 52. The specific structure of the adapter 51 and the clutch connection part 121 can be a mechanical gripper structure, a suction cup structure, or an electromagnetic attracting structure. Preferably, the adapter 51 uses an electromagnetic attracting structure, and the corresponding clutch connection part 121 uses a magnetically conductive structure. The connecting part 121 is magnetically connected. Since the coaxial rotor 53 and the rotating disk 1 are coaxial, when the coaxial rotor aircraft 5 is flying, the rotating disk 1 is driven to rotate simultaneously through the adapter 51. When the coaxial rotor aircraft 5 flies to its destination, the coaxial rotor aircraft 5 hovers and rotates in place, driving the rotating disk 1 to rotate about its central axis. As needed, the binding assembly 3 with the electromagnetic attracting unit can be actively released to cast the fishing net to capture the target object. For the binding assembly 3 with the VELCRO adhesive structure, it needs to be passively released after the rotating disk 1 reaches the preset speed to cast the fishing net to capture the target object. Since the rotating disk reaches a certain speed and has a fixed axis after the adapter 51 is separated from the clutch connecting part 121, the problem of serious tilting or overturning of the rotating disk and fishing net can be avoided, ensuring reliable net casting.

As shown in FIG. 12, as another improvement, the fishing net can be automatically cast directly when floating on the water surface, the rotating disk 1 and the float 4 are rotatably connected. That is, the rotating disk 1 and the float 4 are provided with T-shaped grooves and T-shaped guide rails that are slidably connected to each other, and the rotating disk 1 is placed on the upper part of the float 4. The inner ring of the float 4 is provided with a float support 41, and the float support 41 is provided with a rechargeable battery 42 and a power mechanism 420 electrically connected to the rechargeable battery 42. The power mechanism 420 comprises a power drive motor with a drive gear 421 at the power output end and an internal gear ring 422 located in the circumferential direction of the inner ring of the rotating disk 1. According to the design and force balance requirements, three power drive motors distributed at 120° are set on the float support 41, and the drive gears 421 on them are all meshed with the internal gear ring 422. The bottom of the float 4 is provided with a damping baffle 43. When the rotating disk 1 floats on the water surface through the float 4 and the power mechanism 420 drives the rotating disk 1, the damping baffle 43 causes the rotating disk 1 to rotate with respect to the float 4 through the reaction force of the water.

In use, the coaxial rotorcraft 5 carries the rotating disk 1 which has been folded and tied with a fishing net, and flies to the destination. Then, the control adapter 51 separates from the clutch connection 121, and the rotating disk 1 falls and floats on the water. When the target object is detected, the power mechanism 420 starts and drives the rotating disk 1 to reach the preset speed, and releases the fishing net, so that it opens to form a net trapping space 22 to surround the target object. Then, the underwater reel 24 closes the fishing net. Finally, the coaxial rotorcraft 5 is controlled to connect the adapter 51 and the clutch connection 121 to lift the rotating disk and the fishing net and fly to the predetermined position.

As shown in FIG. 8, in this embodiment, the float support 41 is equipped with a generator 44 for charging the rechargeable battery 42. The float 4 has a hollow structure and can store fuel supplied to the generator 44. By configuring fuel, generator and corresponding charger, it is possible to prepare for long-distance fishing at sea, with the fuel stored in the float cavity. In addition, a plurality of oil separators 45 are evenly spaced inside the float 4. The oil separators 45 are provided with slow flow holes 451 for the fuel to flow smoothly between adjacent sections of the oil separators 45. The slow flow holes 451 are relatively small holes. The purpose of setting the oil separators is to prevent the float from tilting during takeoff and flight, which would cause it to sway in the float cavity and affect the stability of the flight. The purpose of making slow flow holes 451 on the oil separators is to keep the fuel in the adjacent isolation sections in a state of fine flow at all times, so as to maintain balance.

As an example of the method in this application, the aircraft uses a multi-rotor aircraft.

The inner side of the rotating disk 1 is inclined upward and connected to a plurality of connecting rods 12 to form a suspender. The a plurality of connecting rods 12 form a central suspender 10. The multi-rotor aircraft 6 comprises a connecting base 62. The upper part of the connecting base 62 has a circular array of a plurality of outwardly extending support rods 63. Each support rod 63 is connected to an eccentric rotor 64, that is, the rotation axis of all eccentric rotors 64 is eccentric to the central rotation axis of the rotating disk. A rotating disk drive mechanism 61 is provided extending from the bottom of the connecting base 62. The rotating disk drive mechanism 61 comprises a motor placed inside the connecting base 62 and a gear on the output shaft of the motor, which meshes with the gear connected to the adapter 51. The multi-rotor aircraft 6 is fixedly connected to the upper end of the central hanger 10 through the adapter 51. The rotating disk drive mechanism 61 drives the rotating disk 1 to rotate. When the multi-rotor aircraft 6 flies to the destination carrying the rotating disk 1 and the fishing net 2, it hovers in place when it reaches the airspace above the destination. The rotating disk drive mechanism 61 at the bottom of the multi-rotor aircraft 6 drives the rotating disk 1 and the fishing net 2 to rotate about its central axis at a certain speed. When the rotation speed of the rotating disk 1 and the fishing net 2 reaches the preset speed, the binding assembly 3 automatically or passively releases the fishing net 2. The counterweight 21 flies out along the circumferential tangential direction of the rotating disk 1, so that the fishing net 2 opens under the traction of the counterweight 21 to form a net trapping space 22.

As shown in FIGS. 9 and 10, as another improvement, a float 4 is connected to the rotating disk 1, and a clutch connection part 121 is formed at the upper end of the central hanger 10. The multi-rotor aircraft 6 is connected to the clutch connection part 121 through the adapter 51 and drives the rotating disk 1 to rotate through the rotating disk drive mechanism 61.

In use, the multi-rotor aircraft 6 carries the rotating disk 1 and fishing net 2 to the destination. During the flight, the rotating disk 1 and fishing net 2 are driven to rotate by the rotating disk drive mechanism 61 set at the bottom of the multi-rotor aircraft 6. When it reaches the destination and the rotating disk 1 and fishing net 2 reach the preset speed, the multi-rotor aircraft 6 separates from the rotating disk 1. The rotating disk reaches a certain speed and has a fixed axis to avoid serious tilting or overturning of the rotating disk and fishing net. The binding assembly 3 automatically or passively releases the fishing net 2. The counterweight 21 flies out along the circumferential tangential direction of the rotating disk 1, so that the fishing net 2 opens under the traction of the counterweight 21 to form a net trapping space 22.

As a further improvement, as shown in FIGS. 8 and 9, a turbofan 7 is provided inside the rotating disk 1 so that after the adapter 51 is separated from the clutch connection part 121, the rotating disk 1 has an initial rotation speed and fixed axis around its central line. When the rotating disk 1 is in free fall in the air, it is accelerated to rotate by the turbofan 7. When the rotating disk 1 rotates to the preset speed, the fishing net 2 and the counterweight 21 overcome the constraint force of the binding assembly 3 and loosen the fishing net 2, so that the fishing net 2 opens under the traction of the counterweight 21 to form the fishing net trapping space 22.

As another improvement, the inner ring of the float 4 is provided with a float support 41, on which a rechargeable battery 42 and a power mechanism 420 electrically connected to the rechargeable battery 42 are mounted. When the adapter 51 is disengaged from the clutch connection part 121, the power mechanism 420 is used to drive the rotating disk 1 to rotate with respect to the float 4. Similarly, the bottom of the float 4 is also provided with a damping baffle 43. When the rotating disk 1 floats on the water surface through the float 4 and the power mechanism 420 drives the rotating disk 1, the damping baffle 43 causes the rotating disk 1 to rotate with respect to the float 4 through the reaction force of the water. In addition, a generator 44 for charging the rechargeable battery 42 is provided on the float support 41. The float 4 has a hollow structure and stores fuel supplied to the generator 44, enabling it to operate at long distances. In addition, a number of oil separators 45 are evenly spaced inside the float 4. The oil separators 45 are provided with slow flow holes 451 for the smooth flow of fuel between adjacent sections of the oil separator 45.

In use, the multi-rotor aircraft 6 carries the rotating disk 1 which has been folded and tied with a fishing net, and flies to the destination. Then, the control adapter 51 separates from the clutch connection 121, and the rotating disk 1 falls and floats on the water. When the target object is detected, the power mechanism 420 starts and drives the rotating disk 1 to reach the preset speed, and releases the fishing net, so that it opens to form a net trapping space 22 to surround the target object. Then, the underwater reel 24 closes the fishing net. Finally, the multi-rotor aircraft 6 is controlled to connect the adapter 51 and the clutch connection 121 to lift the rotating disk and the fishing net and fly to the predetermined position.

An example of the auxiliary mechanism used in the method of this application is illustrated in the following description.

The auxiliary mechanism is a rotating column 8 set on the deck of the ship. A support manipulator 81 is provided on the upper part of the rotating column 8. The upper end of the support manipulator 81 is provided with a circular insertion opening 82 for supporting the rotating disk 1. When the rotating column 8 is controlled to rotate, the support manipulator 81 rotates accordingly. The rotating disk 1 is provided with an annular groove 13 along the circumference. One end of the flexible drive belt 9 is a fixed end that is fixedly connected to the support manipulator 81 and rotates with the rotating column 8. The other end of the flexible drive belt 9 is a free end that is used to wrap around the annular groove 13. When the rotating column 8 drives the support manipulator 81 to rotate instantaneously, the rotating disk 1 located on the support manipulator 81 is thrown out accordingly. When thrown out, the rotating disk 1 has a certain speed of rotation around its central axis under the pull of the flexible drive belt 9. When the rotating disk 1 rotates to the preset speed, the fishing net 2 and the counterweight 21 overcome the constraint force of the binding assembly 3 and loosen the fishing net 2, so that the fishing net 2 opens under the traction of the counterweight 21 to form a net trapping space 22.

When in use, after the boat sails to the target waters, the rotating column 8 drives the support manipulator 81 and the rotating disk 1 to rotate and throw out the rotating disk 1. The rotating disk 1 rotates under the pull of the flexible drive belt 9. When the rotating disk 1 with fixed axis rotates to the preset speed, the binding assembly 3 automatically or passively loosens the fishing net 2, so that the fishing net 2 opens under the traction of the counterweight 21 to form the fishing net trapping space 22.

As an improvement, a turbofan 7 is provided inside the rotating disk 1 so that the rotating disk 1 accelerates its rotation during free fall in the air after being thrown out. When the rotating disk 1 with fixed axis rotates to the preset speed, the fishing net 2 and the counterweight 21 overcome the constraint force of the binding assembly 3 and loosen the fishing net 2, so that the fishing net 2 opens under the traction of the counterweight 21 to form a net trapping space 22.

In the different deployment embodiments described above, for small-scale fish collection, the coaxial rotorcraft 5 or multi-rotorcraft 6 can take off directly, slide, and pull the fishing net, allowing the fish to enter the swirling area of the fishing net at the end. Then, it takes off again, returns to the ship deck, lowers, and hovers, where the fish are manually removed and placed in a fish basket. For large-scale fish collection, the coaxial rotorcraft 5 or multi-rotorcraft 6 cannot be directly lifted and flown. In this case, the ship can use a large-area seine net to bottom-encircle the fish pre-trapped in the fishing net. After the large net has enclosed the area, the coaxial rotorcraft 5 or multi-rotorcraft 6 can take off again, pulling out a small number of fish and flying them back to the ship's deck. Before the next netting operation, the fishing net is folded again and secured to the rotating disk using the binding assembly 3, with the folded net supported by a tray to prevent it from scattering.

In order to effectively monitor the target object before netting, a periscope and/or sonar fish detector 46 are provided at the bottom of the floating support 41. When the coaxial rotorcraft 5 or multi-rotorcraft 6 carries the rotating disk 1 with the fishing net folded and tied, it flies to the destination and hovers. The rotating disk is on or near the water surface. First, the periscope or sonar fish detector is lowered. The periscope or sonar fish detector is controlled by a miniature winch to raise and lower the altitude. When the fish are found to be gathering in the water below the rotating disk, the image of the fish gathering can be seen visually on the handheld mobile control terminal. Then, it can take off and hover to rotate for netting; or the control adapter 51 is separated from the clutch connection 121, and the power mechanism 420 is started to drive the rotating disk 1 to the preset speed, and the fishing net is loosened and opened to form a netting space 22 to trap the target object.

Furthermore, the bottom of the float support 41 is equipped with a spotlight 47 and/or a bait box 48. When the coaxial rotorcraft 5 or multi-rotorcraft 6 carries the rotating disk 1 with the fishing net folded and tied, flies to the destination and floats in the water, and the periscope or sonar fish detector does not find any fish, bait can be placed in the bait box 48 and/or the spotlight 47 can be turned on to attract fish for trapping.

In some embodiments of this application, a turbofan 7 is installed inside the rotating disk 1. The main purpose is that when the coaxial rotorcraft 5 or multi-rotorcraft 6 carrying the rotating disk 1 with the fishing net attached flies to the destination and separates from the rotating disk, the fishing net is still attached. Therefore, the rotating disk 1 needs to continue rotating faster. The turbofan 7 can accelerate the rotating disk 1, which is in free fall. That is, the angle of the windward side of the turbofan 7 blades gradually changes, guiding the airflow to concentrate and rush out towards the central shaft hole at the intersection of the blades of the turbofan 7. In this application, the blades of the turbofan 7 have a relatively high thickness and moderate relative curvature; the leading edge of the blades is relatively thick and smooth to reduce aerodynamic losses and drag, while the trailing edge of the blades is relatively thin and sharp to reduce turbulence generation and improve the overall quality of the airflow.

Furthermore, the airfoil thickness of the blades varies with distance from the blade root; specifically, it is thicker at the root to withstand greater loads and rotational speeds, and thinner at the tip to reduce drag and improve flow field distribution. Additionally, the leading-edge airfoil of the blades in this application has a smaller radius of curvature on its upper surface to generate a higher suction effect, which helps improve the lift and efficiency of the blades. The trailing edge of the blades has a certain curvature, called trailing-edge camber, which reduces peak drag and turbulence generation, improving the aerodynamic performance of the blades.

In the step B of this application, the aircraft can detect the target object in advance, mark the location coordinates of the target object detected by the aircraft using GPS or Beidou system, and feed them back to the terminal. After analysis and processing by the terminal, the aircraft or auxiliary mechanism can carry the rotating disk 1 and the fishing net to the destination airspace according to the marked location coordinates to release the fishing net 2 to capture the target object, thereby achieving targeted capture and improving capture accuracy and efficiency.

Furthermore, in the step B, this application allows for the deployment of multiple rotating disks 1 and fishing nets 2, all of which are spread out to form a net trapping space 22. The sonar detectors 46 on the rotating disks 1 transmit capture information to the terminal, which analyzes and processes the capture information to determine the order of net collection. The aircraft then matches and connects the different rotating disks 1 and fishing nets 2 in this order via the central hanger 10, thereby retrieving the rotating disks 1 and fishing nets 2 and flying them to the predetermined positions for deployment. This achieves a mode of one person operating multiple nets, thus realizing the goal of efficient operation.

Regarding the method of this application, when the rotating disk 1 and the fishing net are launched towards the destination via an aircraft or auxiliary mechanism, based on the radius of the opening of the fishing net 2 and the rotational speed required for the rotating disk 1 to unfold, calculations and experiments can be conducted to determine that the fishing net 2 should have a reasonable height range when it is released, so that when the fishing net 2 unfolds and strikes the land target or water surface, it is essentially at a horizontal plane, achieving the optimal effect. If the height is too high, the free edge of the fishing net 2 will be higher than the plane of the rotating disk 1 when it strikes the land target or water surface, resulting in an unsatisfactory net-setting effect; if the height is too low, the fishing net 2 will strike the land target or water surface before it is fully unfolded, similarly affecting the capture effect.

## Claims

1. An amphibious netting system, comprising a fishing net (2) and a rotating disk (1) rotatable about its own central axis, wherein the fishing net (2) comprises a connecting part and a free part, the fishing net (2) is connected to the rotating disk (1) through the connecting part, and the free part of the fishing net (2) is provided with a counterweight (21), **characterized in that** the fishing net (2) is bound to the rotating disk (1) by a binding assembly (3) after folding and rotates with the rotating disk (1), and a tray (11) for supporting the folded fishing net is formed circumferentially on the outer side of the rotating disk (1), wherein after the fishing net (2) is folded, the free part of the fishing net (2) and the counterweight (21) are located on an outside, wherein when the rotating disk (1) rotates to a preset speed, the binding assembly (3) automatically or passively loosens the fishing net (2), wherein the counterweight (21) flies out along a circumferential tangential direction of the rotating disk (1), the fishing net (2) opens under the traction of the counterweight (21) to form a net trapping space (22), wherein the free part of the fishing net (2) is provided with a take-up line (23) along a circumferential direction, the free part of the fishing net (2) is provided with a submersible reel (24) for winding the take-up line (23) to close the free part of the fishing net (2).

2. The amphibious netting system according to claim 1, wherein a central hanger (10) is coaxially connected to an inner side of the rotating disk (1), and the amphibious netting system further comprises a coaxial rotorcraft (5), a bottom of the coaxial rotorcraft (5) is coaxially fixedly connected to the central hanger (10), and when the coaxial rotorcraft (5) hovers and spins in place, the rotating disk (1) is driven to rotate about its central axis.

3. The amphibious netting system according to claim 1, wherein a float (4) is connected to the rotating disk (1), a central hanger (10) is coaxially connected to an inner side of the rotating disk (1), a clutch connection part (121) is formed at an upper end of the central hanger (10), and the amphibious netting system further comprises a coaxial rotorcraft (5), a bottom of the coaxial rotorcraft (5) is provided with an adapter (51) for detachable connection with the clutch connection part (121), and when the coaxial rotor aircraft (5) hovers and spins in place, the rotating disk (1) is driven to rotate about its central axis by connecting the adapter (51) and the clutch connection part (121), the rotating disk (1) is equipped with a turbofan (7) to allow the rotating disk (1) to accelerate rotation when the rotating disk (1) is in free fall in the air, wherein when the rotating disk (1) rotates to the preset speed, the binding assembly (3) actively or passively loosens the fishing net (2), so that the fishing net (2) opens under the traction of the counterweight (21) to form the net trapping space (22);
wherein an inner ring side of the float (4) is provided with a float support (41), and the float support (41) is provided with a rechargeable battery (42) and a power mechanism (420) electrically connected to the rechargeable battery (42), wherein when the adapter (51) is separated from the clutch connection (121) and the rotating disk (1) floats on a water surface, the power mechanism (420) is used to drive the rotating disk (1) to rotate with respect to the float (4) in a timely manner;
wherein a bottom of the float (4) is provided with a damping baffle (43), when the rotating disk (1) floats on the water surface through the float (4) and the power mechanism (420) drives the rotating disk (1), the damping baffle (43) causes the rotating disk (1) to rotate with respect to the float (4) through the reaction force of water.

4. The amphibious netting system according to claim 1, wherein a float (4) is connected to the rotating disk (1), a central hanger (10) is coaxially connected to an inner side of the rotating disk (1), a clutch connection part (121) is formed at an upper end of the central hanger (10), and the amphibious netting system further comprises a multi-rotor aircraft (6), a rotating disk drive mechanism (61) is provided at a bottom of the multi-rotor aircraft (6), and ta power output end of the rotating disk drive mechanism (61) is provided with a detachable connection with the clutch connection part (121), the multi-rotor aircraft (6) is connected to the adapter (51) and the clutch connection part (121) through the adapter (51) and drives the rotating disk (1) to rotate about its central axis through the rotating disk drive mechanism (61), the rotating disk (1) is equipped with a turbofan (7) to allow the rotating disk (1) to accelerates rotation when the rotating disk (1) is in free fall in the air, when the rotating disk (1) rotates to the preset speed, the binding assembly (3) actively or passively loosens the fishing net (2), so that the fishing net (2) opens under the traction of the counterweight (21) to form the net trapping space (22);
wherein an inner ring side of the float (4) is provided with a float support (41), and the float support (41) is provided with a rechargeable battery (42) and a power mechanism (420) electrically connected to the rechargeable battery (42), wherein when the adapter (51) is separated from the clutch connection (121) and the rotating disk (1) floats on a water surface, the power mechanism (420) is used to drive the rotating disk (1) to rotate with respect to the float (4) in a timely manner;
wherein a bottom of the float (4) is provided with a damping baffle (43), when the rotating disk (1) floats on the water surface through the float (4) and the power mechanism (420) drives the rotating disk (1), the damping baffle (43) causes the rotating disk (1) to rotate with respect to the float (4) through the reaction force of water.

5. The amphibious netting system according to claim 3 or 4, wherein the float support (41) is provided with a generator (44) for charging the rechargeable battery (42), the float (4) is a hollow structure and stores fuel oil supplied to the generator (44); a plurality of oil separators (45) are evenly spaced inside the float (4), and the oil separators (45) are provided with slow flow holes (451) for the fuel oil to flow smoothly between adjacent sections of the oil separators (45).

6. The amphibious netting system according to claim 1, wherein the binding assembly (3) comprises an electromagnetic attracting unit (31) and a binding strap (32) that are relatively fixedly connected to an inner side of the rotating disk (1), one end of the binding strap (32) is relatively fixedly connected to the rotating disk (1) or the electromagnetic attracting unit (31), and the other end of the binding strap (32) is provided with a magnetic conductive element (33) for magnetic attraction by the electromagnetic attracting unit (31); or the binding assembly (3) is a binding strap (32) with a VELCRO adhesive structure, the fishing net is folded and bound to the rotating disk (1) by the binding strap (32), when the rotating disk (1) rotates to the preset speed, the fishing net (2) and the counterweight (21) overcome a VELCRO adhesive force and loosen the fishing net (2), so that the fishing net (2) opens under the traction of the counterweight (21) to form the net fishing space (22).

7. An amphibious netting system, **characterized in that** comprising a fishing net (2) and a rotating disk (1) rotatable about about its own central axis, the rotating disk (1) is connected to a float (4), the fishing net (2) has a connecting part and a free part, the fishing net (2) is connected to the rotating disk (1) through the connecting part, the free part of the fishing net (2) is provided with a counterweight (21), an outer side of the rotating disk (1) is formed with a tray (11) for carrying the folded fishing net along a circumferential direction, the fishing net (2) is bound to the rotating disk (1) by a binding assembly (3) after being folded and rotates with the rotating disk (1), the free part of the fishing net (2) and the counterweight (21) are located on an outer side after the fishing net (2) is folded;
wherein the amphibious netting system further comprises a rotating column (8) and a flexible drive belt (9), the rotating column (8) is equipped with a support manipulator (81) for supporting a rotating disk (1), the rotating disk (1) has an annular groove (13) along a circumference thereof, one end of the flexible drive belt (9) is fixedly connected to the support manipulator (81) and rotates with the rotating column (8), the other end of the flexible drive belt (9) is used to wrap around the annular groove (13) of the rotating disk (1) located on the support manipulator (81), wherein when the rotating column (8) drives the support manipulator (81) and the rotating disk (1) to rotate and throw out the rotating disk (1), the rotating disk (1) rotates under the pull of the flexible drive belt (9); the rotating disk (1) is equipped with a turbofan (7) so that the rotating disk (1) accelerates rotation when the rotating disk (1) is in free fall in the air, and when the rotating disk (1) rotates to the preset speed, the binding assembly (3) automatically or passively loosens the fishing net (2), so that the fishing net (2) opens under the traction of the counterweight (21) to form a net trapping space (22).

8. The amphibious netting system according to claim 7, wherein a central hanger (10) is coaxially connected to an inner side of the rotating disk (1), and a clutch connection part (121) is formed at an upper end of the central hanger (10).

9. A netting method by a fishing net (2) and a rotating disk (1) rotatable about its own central axis, wherein the rotating disk (1) is connected to a float (4), the fishing net (2) has a connecting part and a free part, the fishing net (2) is connected to the rotating disk (1) through the connecting part, a tray (11) for supporting the folded fishing net is formed circumferentially on an outer side of the rotating disk (1), the fishing net (2) is bound to the rotating disk (1) by a binding assembly (3) after folding and rotates with the rotating disk (1), the free part of the fishing net (2) is provided with a counterweight (21), the free part of the fishing net (2) is provided with a take-up line (23) which is circumferentially threaded through the fishing net (2), and the free part of the fishing net (2) is provided with a submersible reel (24) for winding the take-up line (23) to close the free part of the fishing net (2), **characterized in that** the netting method comprises the following steps:
A, folding the fishing net: after folding the fishing net (2), the fishing net (2) is tied to the rotating disk (1) by the binding assembly (3) and is allowed to rotate with the rotating disk (1), wherein after folding, the free part of the fishing net (2) and the counterweight (21) are located on an outside;
B, dropping: the rotating disk (1) and fishing net are dropped into an airspace above a destination via an aircraft or auxiliary mechanism;
C, casting the fishing net: after the rotating disk (1) is above the destination or falls into water, the rotating disk (1) rotates about its central axis, when the rotating disk (1) rotates to the preset speed, the binding assembly (3) automatically or passively loosens the fishing net (2), the counterweight (21) flies out along a circumferential tangential direction of the rotating disk (1), so that the fishing net (2) opens under the traction of the counterweight (21) to form a net trapping space (22);
D, retrieving the fishing net: first activating the underwater reel (24) to wind the take-up line (23) that runs around the free part of the fishing net (2) until the closure of the free part of the fishing net (2) is tightened, then, using the aircraft to directly lift the rotating disk (1) and the fishing net (2) to the predetermined position and lower the rotating disk (1) and the fishing net (2); alternatively, first using the fishing boat to pull the fishing net to surround the fishing net (2), and then using the aircraft to lift the rotating disk (1) and the fishing net to a predetermined position and lower the rotating disk (1) and the fishing net (2); alternatively, using the aircraft to lift the rotating disk (1) and the fishing net (2) to connect with a hoisting device lowered by a fishing boat, and then using a winch on the fishing boat to lift the rotating disk (1) and the fishing net (2) to the predetermined position on the fishing boat and lower the rotating disk (1) and the fishing net (2).

10. The netting method according to claim 9, wherein the aircraft in the step B is a coaxial multi-rotor aircraft (5), during the process of the coaxial multi-rotor aircraft (5) carrying the rotating disk (1) and the fishing net (2) to the destination, the rotating disk (1) and the fishing net (2) rotate accordingly with the coaxial multi-rotor aircraft (5); when the coaxial multi-rotor aircraft (5) reaches the airspace above the destination, and the rotation speed of the rotating disk (1) and the fishing net (2) driven by the coaxial multi-rotor aircraft (5) reaches the preset speed, the coaxial multi-rotor aircraft (5) hovers and rotates in place, driving the rotating disk (1) to rotate about its central axis, at the same time, the binding assembly (3) automatically or passively releases the fishing net (2), and the counterweight (21) flies out along the circumferential tangential direction of the rotating disk (1), so that the fishing net (2) opens under the traction of the counterweight (21) to form the net trapping space (22);
alternatively, the aircraft is a coaxial multi-rotor aircraft (5), during the flight of the coaxial multi-rotor aircraft (5) carrying the rotating disk (1) and the fishing net (2) to the destination, the rotating disk (1) and the fishing net (2) rotate accordingly with the coaxial multi-rotor aircraft (5), when the coaxial multi-rotor aircraft (5) reaches the airspace above the destination, and the rotation speed of the rotating disk (1) and the fishing net (2) driven by the coaxial multi-rotor aircraft (5) reaches the preset speed, the coaxial multi-rotor aircraft (5) hovers and rotates in place, driving the rotating disk (1) to rotate about its central axis, the coaxial multi-rotor aircraft (5) is separated from the rotating disk (1), and the rotating disk (1) and the fishing net (2) rotate at an initial speed of rotating around its central axis, at the same time, the binding assembly (3) automatically or passively releases the fishing net (2), and the counterweight (21) flies out along the circumferential tangential direction of the rotating disk (1), so that the fishing net (2) opens under the traction of the counterweight (21) to form the net trapping space (22);
alternatively, the aircraft is a multi-rotor aircraft (6), when the multi-rotor aircraft (6) flies to the destination carrying the rotating disk (1) and the fishing net (2), when the multi-rotor aircraft (6) reaches the airspace above the destination, the multi-rotor aircraft (6) hovers in place and drives the rotating disk (1) and the fishing net (2) to rotate about its central axis at a certain speed through the rotating disk drive mechanism (61) set at the bottom of the multi-rotor aircraft (6), when the rotating disk (1) and the fishing net (2) reach the preset speed, the binding assembly (3) automatically or passively releases the fishing net (2), and the counterweight (21) flies out along the circumferential tangential direction of the rotating disk (1), so that the fishing net (2) opens under the traction of the counterweight (21) to form the net trapping space (22);
alternatively, the aircraft is a multi-rotor aircraft (6), during the flight of the multi-rotor aircraft (6) carrying the rotating disk (1) and the fishing net (2) to the destination, the rotating disk (1) and the fishing net (2) are driven to rotate by the rotating disk drive mechanism (61) set at the bottom of the multi-rotor aircraft (6), when the multi-rotor aircraft (6) reaches the airspace above the destination, and the rotating disk (1) and the fishing net (2) rotate about the central axis and have an initial speed, the multi-rotor aircraft (6) is separated from the rotating disk (1), at the same time, the binding assembly (3) automatically or passively releases the fishing net (2), and the counterweight (21) flies out along the circumferential tangential direction of the rotating disk (1), so that the fishing net (2) opens under the traction of the counterweight (21) to form the net trapping space (22).

11. The netting method according to claim 9, wherein the aircraft in the step B is a coaxial multi-rotor aircraft (5), during the process of the coaxial multi-rotor aircraft (5) carrying the rotating disk (1) and the fishing net (2) to the destination, the rotating disk (1) and the fishing net (2) rotate accordingly with the coaxial multi-rotor aircraft (5), when the coaxial multi-rotor aircraft (5) reaches the airspace above the destination, the rotating disk (1) has a certain rotation speed around its central axis, the coaxial multi-rotor aircraft (5) is separated from the rotating disk (1); during the free fall motion of the rotating disk (1), the rotating disk (1) is accelerated to rotate by a built-in turbofan (7), when the rotating disk (1) rotates to the preset speed, the binding assembly (3) automatically or passively releases the fishing net (2), the counterweight (21) flies out along the circumferential tangential direction of the rotating disk (1), so that the fishing net (2) opens under the traction of the counterweight (21) to form the net trapping space (22);
alternatively, after the coaxial multi-rotor aircraft (5) flies to the destination carrying the rotating disk (1) and the fishing net (2), the coaxial multi-rotor aircraft (5) is separated from the rotating disk (1), the rotating disk (1) and the fishing net (2) fall into the water and float on the water surface through the float (4), the rotating disk (1) is driven by the power mechanism (420) in time to drive the fishing net (2) to rotate together, when the rotating disk (1) rotates to the preset speed, the binding assembly (3) automatically or passively releases the fishing net (2), the counterweight (21) flies out along the circumferential tangential direction of the rotating disk (1), so that the fishing net (2) opens under the traction of the counterweight (21) to form the net trapping space (22);
alternatively, the aircraft is a multi-rotor aircraft (6), when the multi-rotor aircraft (6) flies to the destination airspace carrying the rotating disk (1) and the fishing net (2), the multi-rotor aircraft (6) is separated from the rotating disk (1), the rotating disk (1) has a certain rotation speed around its central axis; during the free fall motion of the rotating disk (1), the rotating disk (1) is accelerated to rotate by a built-in turbofan (7), when the rotating disk (1) rotates to the preset speed, the binding assembly (3) automatically or passively releases the fishing net (2), the counterweight (21) flies out along the circumferential tangential direction of the rotating disk (1), so that the fishing net (2) opens under the traction of the counterweight (21) to form the net trapping space (22);
alternatively, after the multi-rotor aircraft (6) flies to the destination carrying the rotating disk (1) and the fishing net (2), the multi-rotor aircraft (6) is separated from the rotating disk (1), the rotating disk (1) and the fishing net (2) fall into the water and float on the water surface through the float (4), the rotating disk (1) is driven by the power mechanism (420) in time to drive the fishing net (2) to rotate together, when the rotating disk (1) rotates to the preset speed, the binding assembly (3) automatically or passively releases the fishing net (2), the counterweight (21) flies out along the circumferential tangential direction of the rotating disk (1), so that the fishing net (2) opens under the traction of the counterweight (21) to form the net trapping space (22).

12. The netting method according to claim 9, wherein in the step B, the auxiliary mechanism is a rotating column (8) set on a deck of the fishing boat, and a support manipulator (81) is connected to an upper end of the rotating column (8), first, the rotating disk (1) and the fishing net (2) are positioned and placed on an outer end of the support manipulator (81), at the same time, one end of the flexible drive belt (9) is fixedly connected to the support manipulator (81), and the other end of the flexible drive belt (9) is wrapped around the annular groove (13) of the rotating disk (1), after the fishing boat sails to a target water area, when the rotating column (8) drives the support manipulator (81) and the rotating disk (1) to rotate and throw out the rotating disk (1), when the rotating disk (1) is thrown out, the rotating disk (1) has a certain rotation speed around its central axis under the pull of the flexible drive belt (9), and when the rotating disk (1) rotates to the preset speed, the binding assembly (3) automatically or passively loosens the fishing net (2), so that the fishing net (2) opens under the traction of the counterweight (21) to form the net trapping space (22); or when the rotating column (8) drives the support manipulator (81) and the rotating disk (1) to rotate and throw out the rotating disk (1), the rotating disk (1) has a certain speed of rotation around its central axis under the pull of the flexible drive belt (9), and the rotating disk (1) is accelerated to rotate by a built-in turbofan (7), and when the speed reaches the preset speed, the binding assembly (3) automatically or passively loosens the fishing net (2), and the counterweight (21) flies out along the circumferential tangential direction of the rotating disk (1), so that the fishing net (2) opens under the traction of the counterweight (21) to form the net trapping space (22).

13. The netting method according to claim 9, wherein when the controlled aircraft hovers close to the water surface, the target fish swarm is observed by a periscope and/or sonar fish swarm detector (46), and when the target fish swarm enters an ambush zone, the aircraft carries the rotating disk (1) and the fishing net (2) to the destination, and the rotating disk (1) reaches the preset speed, the binding assembly (3) automatically or passively releases the fishing net (2), and the counterweight (21) flies out along the circumferential tangential direction of the rotating disk (1), so that the fishing net (2) opens under the traction of the counterweight (21) to form the net trapping space (22), thereby trapping and capturing the target fish swarm.

14. The netting method according to claim 9, wherein when the rotating disk (1) and the fishing net (2) fall into the water and float on the water surface through the float (4), the fish are attracted by turning on a spotlight (47) and/or a bait box (48). After the fish enter an ambush zone, the rotating disk (1) is driven by the power mechanism (420) to rotate the fishing net (2) together and reach the preset speed, the binding assembly (3) automatically or passively loosens the fishing net (2), and the counterweight (21) flies out along the circumferential tangential direction of the rotating disk (1), so that the fishing net (2) opens under the traction of the counterweight (21) to form the net trapping space (22) and trap and capture the target fish.

15. The netting method according to claim 9, wherein after the fishing net (2) is opened to form the net trapping space (22) and the target object is trapped and captured, the rotating disk (1) feeds back the position information to a terminal through a positioning system and feeds back the capture effect to the terminal, the underwater reel (24) is automatically started, and the take-up line (23) is wound to pass through a circumference of the free part of the fishing net (2) until the closing of the free part of the fishing net (2) is tightened, the aircraft automatically reaches the position of the rotating disk (1) and the fishing net (2), lifts it up and returns to the starting point to release the captured target object.

16. The netting method according to claim 9, wherein in the step B, the target object is detected in advance by the aircraft, the position coordinate information is marked and fed back to a terminal, and after analysis and processing by the terminal, the rotating disk (1) and the fishing net are carried to the destination airspace by the aircraft or auxiliary mechanism according to the marked position coordinate information, so as to release the fishing net (2).

17. The netting method according to claim 9, wherein a plurality of rotating disks (1) and fishing nets (2) are deployed and spread out to form the net trapping space (22), a sonar detector (46) on the rotating disk (1) feeds back capture information to a terminal, the terminal analyzes and processes the capture information, determines the order of net collection, and causes the aircraft to match and connect different rotating disks (1) and fishing nets (2) in the order of collection through the central gantry (10), thereby extracting the rotating disks (1) and fishing nets (2) and flying them to a predetermined position to be lowered.
